# EUROPEAN PATENT SPECIFICATION

(11) **EP 4 578 347 B1**
(45) Date of publication and mention of the grant of the patent: **02.09.2026**
(21) Application number: 24222447.5
(22) Date of filing: 20.12.2024
(51) Int. Cl.: A47J 31/44

(54) **EMULSIFICATION DEVICE AND BEVERAGE MACHINE**
EMULGIERVORRICHTUNG UND GETRÄNKEMASCHINE
DISPOSITIF D'ÉMULSIFICATION ET MACHINE À BOISSON

(30) Priority: 29.12.2023 CN 202311861741
(43) Date of publication of application: 02.07.2025
(73) Proprietor: Kalerm Technology (Suzhou) Co., Ltd, Suzhou Jiangsu 215134 (CN)
(72) Inventor: XU, Qiang, Suzhou 215134 (CN); WANG, Yaping, Suzhou 215134 (CN); GAO, Yunhua, Suzhou 215134 (CN)
(74) Representative: Murgitroyd & Company

(56) References cited:
- WO-A1-2023/217061
- US-A- 5 884 552
- US-A1- 2016 296 063
- US-A1- 2020 029 728
- US-A1- 2023 363 577

## Description

### TECHNICAL FIELD

The present disclosure relates to the field of beverage preparation technologies, and in particular, to an emulsification device and a beverage machine.

### BACKGROUND

An existing beverage machine can make a variety of beverages. Milk foam is used when many beverages are made. Milk foam refers to foam made from milk, for example, it can be blended with coffee to form delicious fancy coffee, which is gradually sought after by many coffee lovers. Milk foam is generally realized by an emulsification device, and the emulsification device may be used as a part of a beverage machine, and is used in conjunction with a beverage machine main body.

A principle of an existing emulsification device is generally that steam enters a mixing chamber from a steam channel, a negative pressure is formed in the mixing chamber, which drives milk to flow into the mixing chamber, air is sucked into the mixing chamber through an air channel and is blended with the milk in the mixing chamber to form milk foam, and finally, the milk foam flows out from a milk outlet at a lower part of the mixing chamber.

However, the existing emulsification device can only make milk foam with a single type, which is difficult to meet requirements of users for beverage diversity.

For prior arts, patent US 2016/296063 A1 discloses a beverage frothing device comprises a first beverage passageway comprised of: a first beverage suction chamber in communication with a first beverage suction duct and a first steam inlet duct, wherein the first beverage suction duct is configured for communication with a beverage container; an air inlet port; a frothing arrangement for mixing beverage delivered through the first beverage suction duct with air from the air inlet port and producing frothed beverage; a first beverage dispensing spout, wherefrom frothed beverage is dispensed. The beverage frothing device further comprises a second beverage passageway comprised of a second beverage suction chamber in communication with a second beverage suction duct and a second steam inlet duct, wherein the second beverage suction duct is configured for communication with the beverage container. A steam feeding arrangement is further provided, which is configured for dispensing steam selectively to the first steam delivery duct, for producing frothed beverage, or to the second steam delivery duct for producing hot, unfrothed beverage.

Patent US 2023/363577 A1 discloses an emulsifying device according to the preamble of claim 1. The mixing apparatus includes an inner container and an outer container which define mixing fluid passageways between them. The inner container is received in the outer container with at least two different orientations. Each orientation forms a different set of passageways each including a mixing chamber and a riser passage, where the passageways lead from the inner container to the mixing chamber. The different orientations create different designs of the passageways, to give different mixing functionality.

Patent US 5884552A discloses an emulsifier suitable for emulsifying steam, air and milk for preparing frothed milk for cappuccino and similar beverages. The emulsifier comprises a first steam inlet, an air inlet, a first milk inlet, a first suction chamber and a mixing chamber. The first steam inlet, the air inlet and the first milk inlet open into the first suction chamber. The first suction chamber is in fluid communication with the mixing chamber. The emulsifier further comprises a second steam inlet, a second milk inlet and a second suction chamber. The second steam inlet and the second milk inlet open into the second suction chamber. The second suction chamber is in fluid communication with the mixing chamber for preparing hot, non-frothed milk under supply of steam to the second steam inlet.

Patent US 2020/029728A1 discloses a production method of hot milk with or without froth, with a Venturi effect emulsifying device suitable for sending, into a mixing chamber, a flow of steam so as to aspirate, by Venturi effect, milk and air or only milk, comprises a production cycle of hot milk with froth and a production cycle of hot milk without froth being carried out by supplying an equal flow of steam of equal duration into a mixing chamber having equal volume, equal conformation and equal inlet section of the milk but a different outflow section of the milk.

Patent WO 2023/217061 A1 discloses a liquid mixing device and a beverage making machine. The liquid mixing device comprises: a cup having an accommodation cavity for containing a liquid; a cup holder, the cup being detachably supported by the cup holder; and a Venturi structure, which is integrally formed with the cup holder and is located on one side of the cup, the Venturi structure comprising a mixing cavity, a liquid intake channel in communication with the mixing cavity, a steam channel in communication with a steam source, and an outlet channel for output, wherein the steam channel and the outlet channel are in communication with the mixing cavity , the liquid intake channel is in communication with the accommodation cavity by means of a liquid delivery pipeline , and the liquid intake channel is connected to the liquid delivery pipeline at an angle. The whole Venturi structure is integrated with the cup holder, such that the number of parts is reduced, and the assembly and disassembly are more convenient, thus providing great convenience for a user.

### SUMMARY

A purpose of the present disclosure is to provide an emulsification device that may meet requirements of users for beverage diversity.

Another purpose of the present disclosure is to provide a beverage machine that may meet requirements of users for beverage diversity.

In order to achieve the above-mentioned disclosure purposes, an emulsification device according to claim 1 is provided in the present disclosure.

In some embodiments, a substantial inlet cross-sectional area of the first liquid channel to the first mixing chamber is greater than a substantial inlet cross-sectional area of the second liquid channel to the second mixing chamber.

In some embodiments, the substantial inlet cross-sectional area of the first liquid channel to the first mixing chamber is greater than or equal to S1, the substantial inlet cross-sectional area of the second liquid channel to the second mixing chamber is less than or equal to S2, and S1 > 3 * S2.

In some embodiments, each mixing chamber in at last one mixing chamber of the first mixing chamber and the second mixing chamber includes an upstream mixing chamber and a downstream mixing chamber. Along a flow direction from the upstream mixing chamber to the downstream mixing chamber, a length of the upstream mixing chamber is less than a length of the downstream mixing chamber. Additionally, or alternatively, a cross-sectional area of the upstream mixing chamber is less than a cross-sectional area of the downstream mixing chamber.

In some embodiments, a check valve is disposed in each steam channel in at least one steam channel of the first steam channel and the second steam channel, and the check valve is allowed to open along a direction of steam flowing into a corresponding mixing chamber.

In some embodiments, a joint sealing sleeve is disposed in the steam channel, and the check valve is limited between a step part of the steam channel and the joint sealing sleeve.

In some embodiments, each air channel in at least one air channel of the first air channel and the second air channel is connected to an air valve. The air valve is automatically opened based on a negative pressure formed in a mixing chamber communicated with the air channel to allow external air to enter the mixing chamber. The air valve is connected to a sealing sheet, an inlet of the air valve is covered by the sealing sheet, the sealing sheet is provided with an opening hole, the air valve is communicated with external air through the opening hole, and a hole cross-sectional area of the opening hole is constructed as a substantial inlet cross-sectional area of the air channel to the mixing chamber.

In some embodiments, an upstream part of the first air channel and an upstream part of the second air channel are communicated with each other to form an air hole, and the emulsification device further includes a seal at least partially extending into the air hole. One of an outer wall of the seal and an inner wall of the air hole is provided with a first variable cross-section intake groove and a second variable cross-section intake groove that extend longitudinally. The other of the outer wall of the seal and the inner wall of the air hole is provided with a first sealing convex rib and a second sealing convex rib. The first variable cross-section intake groove is communicated with the first air channel, the second variable cross-section intake groove is communicated with the second air channel, the first sealing convex rib is fit with the first variable cross-section intake groove to change an air intake quantity of the first air channel, and the second sealing convex rib is fit with the second variable cross-section intake groove to change an air intake quantity of the second air channel.

In some embodiments, the Venturi structure further includes a first tubular main body, a second tubular main body and a tube connector. The first steam channel is disposed in the first tubular main body. The second steam channel is disposed in the second tubular main body. The tube connector includes a first connecting channel and a second connecting channel disposed at intervals, the first tubular main body extends into the first connecting channel, the second tubular main body extends into the second connecting channel, and the outlet channel is disposed in the tube connector.

In some embodiments, the first tubular main body includes a first inner section extending into the first connecting channel and a first outer section exposed from the first connecting channel. The second tubular main body includes a second inner section extending into the second connecting channel and a second outer section exposed from the second connecting channel. The first outer section and the second outer section are integrally formed to make the first tubular main body and the second tubular main body integrally form a main body component. The first liquid channel penetrates through a tube wall of the first connecting channel to communicate with the first mixing chamber. The second liquid channel penetrates through a tube wall of the second connecting channel to communicate with the second mixing chamber.

In some embodiments, the emulsification device further includes a locking member is disposed between the main body component and the tube connector. The locking member is configured to be operated to move between two positions to selectively allow and limit the main body component to be separated from the tube connector.

In some embodiments, the main body component is provided with a clamping groove, a guide groove is disposed on the tube connector, the guide groove is communicated with the clamping groove, and the locking member passes through the guide groove and partially extends into the clamping groove. The locking member is configured to be driven to switch between a locking position and an unlocking position relative to the main body component and the tube connector. When the locking member is located at the locking position, the locking member partially extends into the clamping groove. When the locking member is located at the unlocking position, the locking member leaves the clamping groove. The emulsification device further includes an unlocking member. The cover assembly is provided with an opening groove. The unlocking member includes an unlocking part and a hook. The locking member is provided with an installation groove. The unlocking part is exposed outside the cover assembly. The hook passes through the opening groove and at least partially extends into the installation groove. An extension direction of the opening groove is parallel to a guiding direction of the guide groove.

In some embodiments, the emulsification device further includes a switching apparatus, and the first steam channel and the second steam channel are connected to a single steam joint through the switching apparatus. The switching apparatus is configured to control the first steam channel or the second steam channel to selectively communicate with the steam source.

In some embodiments, the beverage machine includes a beverage machine main body and the emulsification device, and the beverage machine main body includes a switching apparatus. The switching apparatus is configured to control the first steam channel or the second steam channel to selectively communicate with the steam source.

A beverage machine provided in the present disclosure includes the emulsification device as described above and a steam source. The first steam channel and the second steam channel of the emulsification device are selectively communicated with the steam source.

The emulsification device provided in the present disclosure includes two mixing chambers, and milk foam with different temperatures (that is, different types) may be produced by the two mixing chambers. Different types of beverages may be obtained by mixing milk foam with different temperatures with coffee or the like. In this way, requirements of users for beverage diversity may be better met.

### BRIEF DESCRIPTION OF THE DRAWINGS

FIG. 1 is a three-dimensional schematic diagram of an emulsification device according to a first implementation of the present disclosure.
FIG. 2 is an exploded schematic diagram of the emulsification device in FIG. 1.
FIG. 3 is a front view of the emulsification device in FIG. 1.
FIG. 4 is a cross-sectional schematic diagram of the emulsification device in FIG. 3 along the A-A line.
FIG. 5 is a cross-sectional schematic diagram of the emulsification device in FIG. 3 along the B-B line.
FIG. 6 is an exploded schematic diagram of an intake part of the emulsification device in FIG. 1.
FIG. 7 is a structural schematic diagram of a set locking member of the emulsification device in FIG. 1.
FIG. 8 is a three-dimensional schematic diagram of an emulsification device according to a second implementation of the present disclosure.
FIG. 9 is a cross-sectional schematic diagram of the emulsification device in FIG. 8 along the C-C line.
FIG. 10 is a cross-sectional schematic diagram of the emulsification device in FIG. 8 along the D-D line.
FIG. 11 is a schematic diagram of an emulsification device according to a third implementation of the present disclosure.
FIG. 12 is a schematic diagram of an emulsification device according to a fourth implementation of the present disclosure.
FIG. 13 is a cross-sectional schematic diagram of the emulsification device in FIG. 12 along the E-E line.
FIG. 14 is a schematic diagram of another scheme for a switching apparatus of the emulsification device in FIG. 12.
FIG. 15 is a schematic diagram of an emulsification device according to a fifth implementation of the present disclosure.
FIG. 16 is an exploded schematic diagram of the emulsification device in FIG. 15.
FIG. 17 is a front view of the emulsification device in FIG. 15.
FIG. 18 is a cross-sectional schematic diagram of the emulsification device in FIG. 17 along the F-F line.
FIG. 19 is an assembly schematic diagram of some components of the emulsification device in FIG. 17.
FIG. 20 is a cross-sectional schematic diagram of the emulsification device in FIG. 17 along the G-G line.
FIG. 21 is a cross-sectional schematic diagram of the emulsification device in FIG. 17 along the H-H line.
FIG. 22 is a structural schematic diagram of a locking member in FIG. 16.
FIG. 23 is a structural schematic diagram of a main body component in FIG. 16.
FIG. 24 is a structural schematic diagram of a locking member, in FIG. 22, located at a locking position.
FIG. 25 is a structural schematic diagram of a locking member, in FIG. 22, located at an unlocking position.

### DETAILED DESCRIPTION OF THE EMBODIMENTS

The present disclosure is described in detail below in combination with specific implementations shown in the accompanying drawings. However, these implementations do not limit the present disclosure. modifications made on structures, methods, or functions by those of ordinary skill in the art according to these implementations are all included in the protection scope of the present disclosure.

It should be understood that the terms, such as, "up", "above", "down", "below", etc. used herein to indicate spatial relative positions are used to describe a relationship of one unit or feature relative to another unit or feature as shown in the accompanying drawings for a purpose of ease of illustration. The terms of spatial relative positions may be intended to include different orientations of a device in use or operation other than those orientations shown in the accompanying drawings.

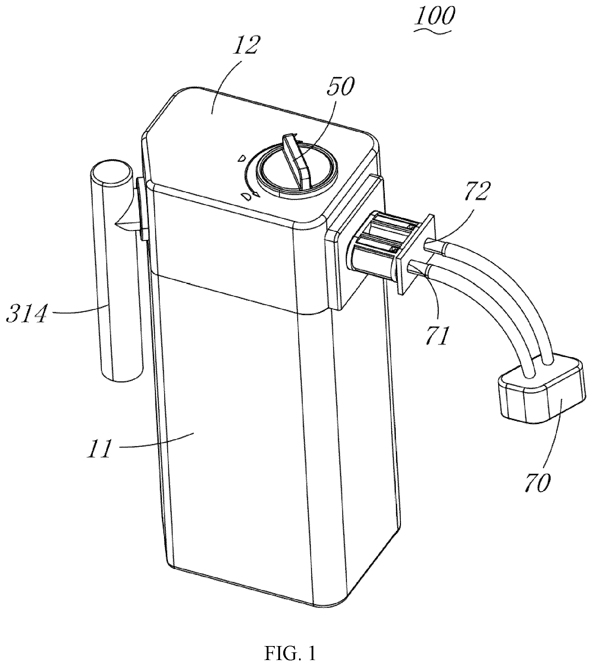

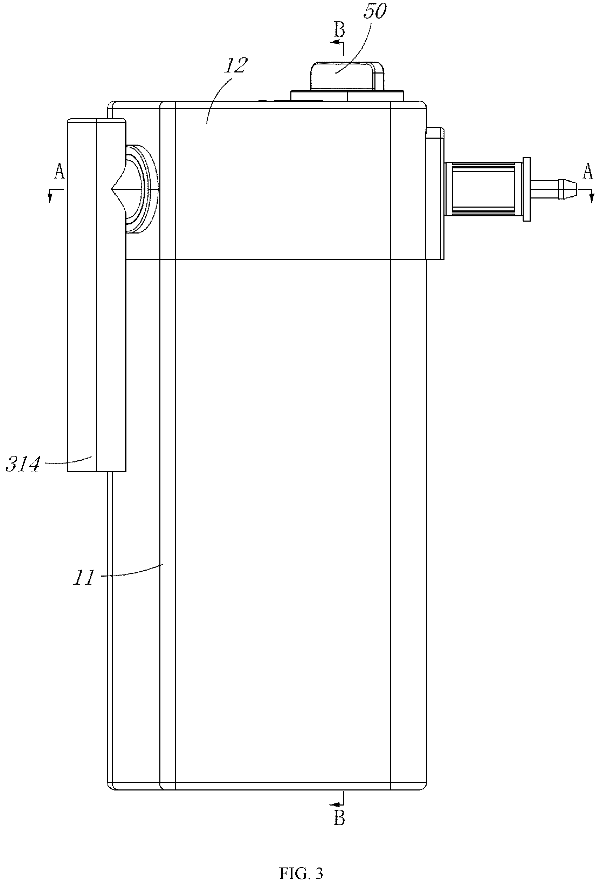

An emulsification device in the specific implementations of the present disclosure is illustrated by taking an emulsification device 100 used in combination with a beverage machine as an example. Referring to FIGS. 1 to 7, in this embodiment, the emulsification device 100 includes a Venturi structure, the Venturi structure is constructed as a structure that can produce a Venturi effect. The Venturi structure includes a first mixing chamber 21 and a second mixing chamber 22. The first mixing chamber 21 is communicated with a first steam channel 211, a first liquid channel 212, a first air channel 213 and an outlet channel 312; and the second mixing chamber 22 is communicated with a second steam channel 221, a second liquid channel 222, a second air channel 223 and the outlet channel 312. The first steam channel 211 and the second steam channel 221 are configured to selectively communicate with a steam source, that is, the first steam channel 211 and the second steam channel 221 are alternatively communicated with the steam source. The first liquid channel 212 and the second liquid channel 222 are configured to communicate with a liquid storage source. The first air channel 213 and the second air channel 223 are configured to communicate with air. The outlet channel 312 is configured to output a milk foam produced by the first mixing chamber 21 or the second mixing chamber 22 based on the Venturi effect.

In a case that the first steam channel 211 is communicated with the steam source, steam flows through the first steam channel 211 into the first mixing chamber 21 to produce a milk foam with a first temperature based on the Venturi effect. In a case that the second steam channel 221 is communicated with the steam source, steam flows through the second steam channel 221 into the second mixing chamber 22 to produce a milk foam with a second temperature based on the Venturi effect. Here, the first temperature is not equal to the second temperature. For example, a difference between the first temperature and the second temperature may be greater than or equal to 10°C.

According to the emulsification device 100 of the present disclosure, the emulsification device 100 has two mixing chambers 21 and 22, and milk foam with different temperatures (that is, different types) may be produced by the two mixing chambers 21 and 22. Different types of beverages may be obtained by mixing milk foam with different temperatures with coffee or the like. Therefore, requirements of users for beverage diversity may be better met by using the emulsification device 100 of the present disclosure.

There are many ways to obtain milk foams with different temperatures. For example, during mixing, different proportions of liquid, steam and air may lead to different temperatures of obtained milk foams. Among liquid, steam and air, a proportion of liquid has the most obvious influence on temperature. In view of this, in an example, a substantial inlet cross-sectional area of the first liquid channel 212 to the first mixing chamber 21 is greater than a substantial inlet cross-sectional area of the second liquid channel 222 to the second mixing chamber 22. Under the Venturi effect, the greater a substantial inlet cross-sectional area of a specific liquid channel to a corresponding mixing chamber, the more liquid (that is, milk) sucked in to the mixing chamber, the higher the proportion of liquid. Due to the lower temperature of the liquid, the higher the proportion of the liquid, the lower the temperature of the milk foam, thus, the temperature of the milk foam generated by the first mixing chamber 21 may be lower than that of the milk foam generated by the second mixing chamber 22. That is, the first temperature is different from the second temperature, and the first temperature is lower than the second temperature.

In a specific example, the substantial inlet cross-sectional area of the first liquid channel 212 to the first mixing chamber 21 is greater than or equal to a first preset value S1, the substantial inlet cross-sectional area of the second liquid channel 222 to the second mixing chamber 22 is less than or equal to a second preset value S2, and the first preset value S1 is greater than three times the second preset value S2, that is, S1 > 3 * S2. In this way, the first temperature and the second temperature can have a sufficiently obvious difference, for example, this difference is greater than or equal to 10°C.

In this specification, the substantial inlet cross-sectional area may be defined as a minimum cross-sectional area of a fluid passage port, communicated with a mixing chamber, of a fluid channel, that is, the substantial inlet cross-sectional area of the first liquid channel 212 to the first mixing chamber 21 is a minimum cross-sectional area of a liquid passage port of the first liquid channel 212 to the first mixing chamber 21, the substantial inlet cross-sectional area of the first air channel 213 to the first mixing chamber 21 is a minimum cross-sectional area of an air passage port of the first air channel 213 to the first mixing chamber 21, the substantial inlet cross-sectional area of the second liquid channel 222 to the second mixing chamber 22 is a minimum cross-sectional area of a liquid passage port of the second liquid channel 222 to the second mixing chamber 22, and the substantial inlet cross-sectional area of the second air channel 223 to the second mixing chamber 22 is a minimum cross-sectional area of an air passage port of the second air channel 223 to the second mixing chamber 22.

By way of example only, a substantial inlet cross-sectional area of the first air channel 213 to the first mixing chamber 21 may be in a first preset correspondence with the substantial inlet cross-sectional area of the first liquid channel 212 to the first mixing chamber 21, and a substantial inlet cross-sectional area of the second air channel 223 to the second mixing chamber 22 may be in a second preset correspondence with the substantial inlet cross-sectional area of the second liquid channel 222 to the second mixing chamber 22. The preset correspondence refers to that the substantial inlet cross-sectional area of the first air channel 213 to the first mixing chamber 21 corresponds to the substantial inlet cross-sectional area of the first liquid channel 212 to the first mixing chamber 21 within a first range, and the substantial inlet cross-sectional area of the second air channel 223 to the second mixing chamber 22 corresponds to the substantial inlet cross-sectional area of the second liquid channel 222 to the second mixing chamber 22 within a second range, and thus milk foam with different temperatures may be outputted.

By way of example only, the first preset correspondence may be: the substantial inlet cross-sectional area of the first air channel 213 to the first mixing chamber 21 is within a first set range; and the second preset correspondence may be: the substantial inlet cross-sectional area of the second air channel 223 to the second mixing chamber 22 is within a second set range. The first set range partially overlaps with the second set range, which is conductive to ensuring that the temperature and quality of generated hot or cold milk foam may meet requirements of users.

The emulsification device 100 may further includes a switching apparatus 70, and the switching apparatus 70 is configured to be operated to control a steam flow to flow into the first mixing chamber 21 from the first steam channel 211 or flow into the second mixing chamber 22 from the second steam channel 221. Through controlling a flow direction of the steam flow by the switching apparatus 70, a mixing chamber for fluid mixing is selected, and a mixing ratio of liquid and air is determined based on the first preset correspondence or the second preset correspondence. Liquid supply volumes of the two liquid channels are different, and an air supply volume corresponds to the liquid supply volume of each liquid channel. Therefore, milk foam with different temperatures and guaranteed quality is produced, with cold milk foam with a temperature in a temperature range of 10°C to 30°C, and hot milk foam with a temperature in a temperature range of 40°C to 70°C. The emulsification device may output hot or cold milk foam with different temperature ranges, and thus milk foam of different tastes may be obtained to meet requirements of different users for more tastes.

In this embodiment, the emulsification device 100 may be constructed as a milk box. The milk box obtains the steam flow by being connected to a beverage machine main body. The switching apparatus 70 includes a control valve. The control valve is disposed in the beverage machine main body. The beverage machine main body is provided with a first steam interface 71 and a second steam interface 72 connected to the control valve, the first steam channel 211 is communicated with the first steam interface 71, the second steam channel 221 is communicated with the second steam interface 72, and the control valve controls the steam flow to be outputted from the first steam interface 71 or to be outputted from the second steam interface 72 based on an input operation of an operation key or an operation panel of the beverage machine. The input operation of the operation key or the operation panel may be used to directly select a taste of milk foam, or to select a beverage blended by milk foam, the taste of milk foam corresponding to the beverage has been set in a control program of the beverage machine, a user can directly select a desired beverage, and the control valve controls a corresponding steam interface to output the steam flow based on the settings of the control program, so that milk foam corresponding to the beverage can be produced. Through one-touch operation on the beverage machine, a flow direction of the steam flow is selected, and milk foam with different temperatures and guaranteed quality may be produced.

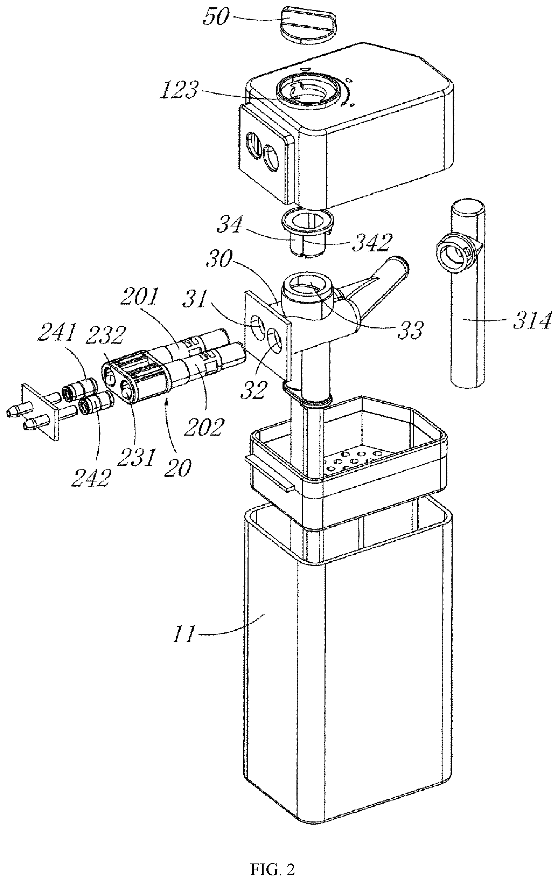

Referring to FIGS. 2 to 4, the Venturi structure includes a main body component 20 and a tube connector 30. The first steam channel 211 and the second steam channel 221 are disposed in the main body component 20 at intervals. The first mixing chamber 21 and the second mixing chamber 22 are disposed in the tube connector 30 at intervals. Exemplarily, the main body component 20 includes a first tubular main body 201 and a second tubular main body 202. The first steam channel 211 is disposed in the first tubular main body 201, and the second steam channel 221 is disposed in the second tubular main body 202. The tube connector 30 includes a first connecting channel 31 and a second connecting channel 32 disposed at intervals. The first tubular main body 201 extends into the first connecting channel 31, the second tubular main body 202 extends into the second connecting channel 32, and the outlet channel 312 is disposed in the tube connector 30. Two tubular main bodies are disposed to ensure the dimensional accuracy of each channel while facilitating the production of different milk foam.

The first tubular main body 201 includes a first inner section 203 extending into the first connecting channel 31 and a first outer section 204 exposed from the first connecting channel 31. The second tubular main body 202 includes a second inner section 205 extending into the second connecting channel 32 and a second outer section 206 exposed from the second connecting channel 32, the first outer section 204 and the second outer section 206 form a conjoined structure. The first liquid channel 212 penetrates through a tube wall of the first connecting channel 31 to communicate with the first mixing chamber 21, and the second liquid channel 222 penetrates through a tube wall of the second connecting channel 32 to communicate with the second mixing chamber 22. Two independent structures for forming milk foam are formed by fitting the main body component 20 and the tube connector 30, which is convenient for assembly. The structure is formed by partial connection of the two tubular main bodies, and thus the overall structure is compact, which may make the installation of the main body component 20 and the tube connector 30 more convenient, and the size of each channel may be accurately controlled.

The first mixing chamber 21 includes a first upstream mixing chamber 215. The first upstream mixing chamber 215 may be defined by the space within the tube connector 30 and the space within the main body component 20. The first liquid channel 212 passes through the tube connector 30. The second mixing chamber 22 includes a second upstream mixing chamber 225. The second upstream mixing chamber 225 may be defined by the space within the tube connector 30 and the space within the main body component 20. The second liquid channel 222 passes through the tube connector 30. The steam flow is alternatively introduced into one of the first steam channel 211 and the second steam channel 221, and a partial vacuum is produced in the first upstream mixing chamber 215 or the second upstream mixing chamber 225. Under the action of negative pressure, the milk from the liquid storage source may be sucked to be mixed with steam and air through the first liquid channel 212 or through the second liquid channel 222.

Exemplarily, the first mixing chamber 21 may include the first upstream mixing chamber 215 and a first downstream mixing chamber 216 disposed sequentially along a direction from input to output of fluid. The milk foam foamed in the first upstream mixing chamber 215 enters the first downstream mixing chamber 216 under propulsion of inertia and subsequent steam. The second mixing chamber 22 may include the second upstream mixing chamber 225 and a second downstream mixing chamber 226 disposed sequentially along a direction from input to output of fluid. The milk foam foamed in the second upstream mixing chamber 225 enters the second downstream mixing chamber 226 under propulsion of inertia and subsequent steam. The steam, milk, and air in the first downstream mixing chamber 216 or the second downstream mixing chamber 226 are further mixed to obtain full, uniform and compact milk foam, a degree of foaming is also increased, and the formed milk foam is discharged from the outlet channel 312. The outlet channel 312 is connected to an outlet tube 314, and the formed milk foam is output to a beverage cup of a user through the outlet tube 314.

The first downstream mixing chamber 216 and the second downstream mixing chamber 226 are both defined by the main body component 20 in the tube connector 30, a length of the first downstream mixing chamber 216 is greater than a length of the first upstream mixing chamber 215, and a length of the second downstream mixing chamber 226 is greater than a length of the second upstream mixing chamber 216. Steam, milk and air can be mixed more fully in the downstream mixing chambers. The first upstream mixing chamber 215 has a first upstream outlet 217, and the first upstream outlet 217 is disposed on the main body component 20. The first downstream mixing chamber 216 has a first downstream outlet 317, and the first downstream outlet 317 is disposed on the tube connector 30. The second upstream mixing chamber 225 has a second upstream outlet 227, and the second upstream outlet 227 is disposed on the main body component 20. The second downstream mixing chamber 226 has a second downstream outlet 327, and the second downstream outlet 327 is disposed on the tube connector 30. A cross-sectional area of the first upstream outlet 217 is greater than a cross-sectional area of the second upstream outlet 227, a cross-sectional area of the first downstream outlet 317 is greater than a cross-sectional area of the second downstream outlet 327, and a cross-sectional area of a steam nozzle in the first steam channel 211 is less than a cross-sectional area of a steam nozzle of the second steam channel 221, so as to further increase a temperature difference of the milk foam outputted from the two mixing chambers.

Further, a first check valve 231 is disposed in the first steam channel 211, and a second check valve 232 is disposed in the second steam channel 221. The first check valve 231 is allowed to open along a direction of steam flowing into the first mixing chamber 21, and the second check valve 232 is allowed to open along a direction of steam flowing into the second mixing chamber 22. A check valve is disposed in each of the two steam channels, which may prevent a situation that when steam is introduced into one of the steam channels, steam or other fluids flow back from the other steam channel, thus ensuring a milk foam production process more reliable. Exemplarily, a first joint sealing sleeve 241 and a second joint sealing sleeve 242 are also disposed in the first steam channel 211 and the second steam channel 221 respectively. The first check valve 231 is limited between a step part of the first steam channel 211 and the first joint sealing sleeve 241, and the second check valve 232 is limited between a step part of the second steam channel 221 and the second joint sealing sleeve 242. One-way communication of a steam channel is achieved through a simple structure, which facilitates assembly and reduces costs. The first check valve 231 and the second check valve 232 may be provided as spherical elements. A spring is disposed between a spherical element and a step part of a steam channel. The spring is pressed against the spherical element to close an outlet of a joint sealing sleeve, so as to ensure that the structure is more reliable.

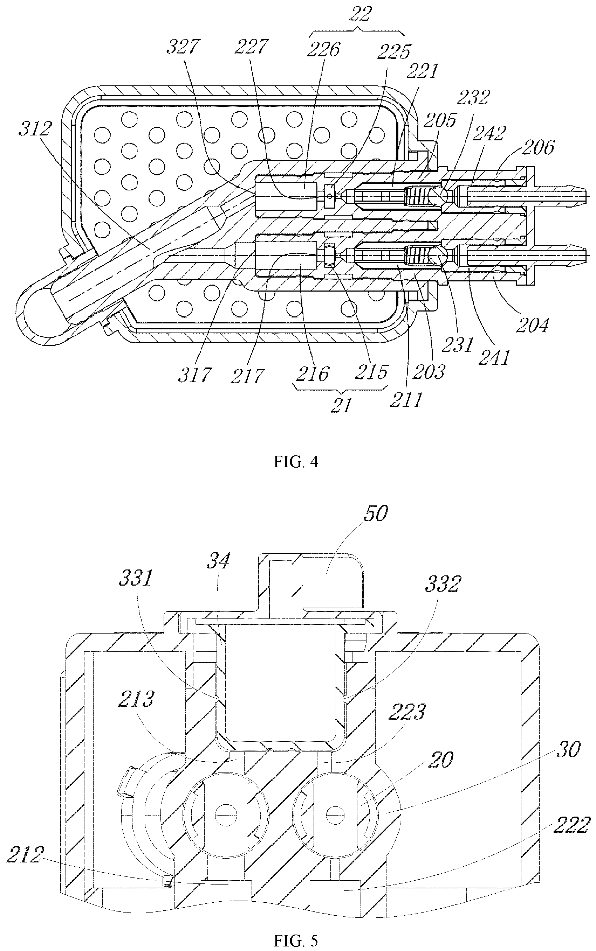

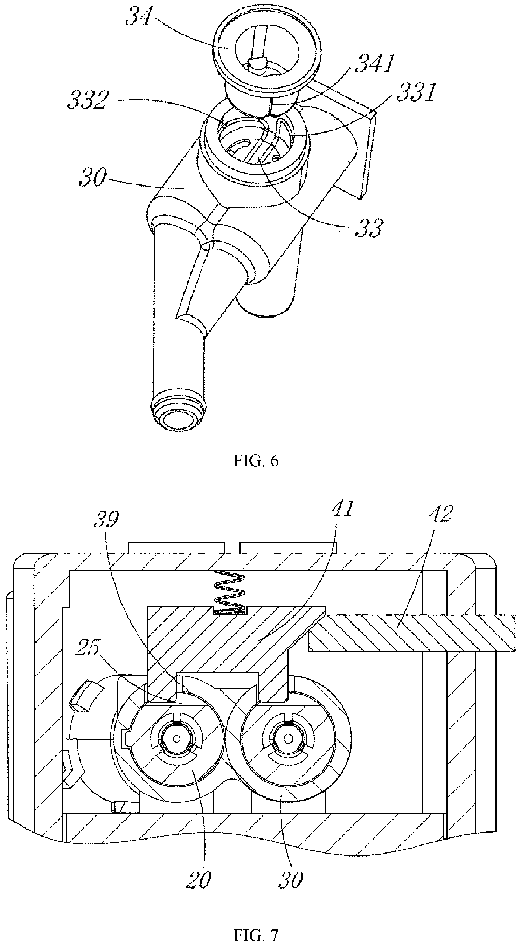

Continuing to refer to FIGS. 5 and 6, an upstream part of the first air channel 213 and an upstream part of the second air channel 223 are communicated with each other to form an air hole 33, and the emulsification device 100 includes a seal 34 at least partially extending into the air hole 33. One of an outer wall of the seal 34 and an inner wall of the air hole 33 is provided with a first variable cross-section intake groove 341 and a second variable cross-section intake groove 342 that extend longitudinally, and the other of the outer wall of the seal 34 and the inner wall of the air hole 33 is provided with a first sealing convex rib 331 and a second sealing convex rib 332. The first variable cross-section intake groove 341 is communicated with the first air channel 213, and the second variable cross-section intake groove 342 is communicated with the second air channel 223. The first sealing convex rib 331 is fit with the first variable cross-section intake groove 341 to change an air intake quantity of the first air channel 213, and the second sealing convex rib 332 is fit with the second variable cross-section intake groove 342 to change an air intake quantity of the second air channel 223.

With an adjustment movement of the seal 34 in one direction, the air supply volume may be gradually reduced or increased. When selecting cold milk foam or hot milk foam, the fineness of the milk foam may be further selected by operating the seal 34. The seal 34 may be connected to a knob 50 or constructed integrally with the knob 50. The knob 50 is disposed on the top of the milk box. The air intake quantity of the first mixing chamber 21 and the second mixing chamber 22 can be controlled through one knob 50, and thus this structure is compact and the operation is convenient. The milk box includes a box 11 and a cover assembly 12 covering the box 11. The box 11 has a liquid storage chamber configured to contain liquid. The seal 34 is connected to the knob 50 through an installation opening 123. The knob 50 drives the seal 34 to move to change the air intake quantity of the two air channels.

By way of example only, as the knob 50 is rotated in one direction, the air intake quantity of the first air channel 213 increases, and the air intake quantity of the second air channel 223 also increases. As the knob 50 is rotated in an opposite direction, the air intake quantity of the first air channel 213 decreases, and the air intake quantity of the second air channel 223 also decreases. That is, in a process of rotating the knob 50, the air intake quantity of the first air channel 213 is positively correlated with the air intake quantity of the second air channel 223. In this way, whether the air intake quantity of the first air channel 213 or the air intake quantity of the second air channel 223 is to be adjusted, an operator can use the same operation mode to achieve, which helps to reduce the difficulty of operation.

Referring to FIG. 7, the emulsification device 100 may further include a locking member 41, the locking member 41 is disposed between the main body component 20 and the tube connector 30, and the locking member 41 is configured to be operated to move between two positions to allow and limit the main body component 20 to be separated from the tube connector 30 along an extending direction of the first connecting channel 31 or the second connecting channel 32. By disposing the locking member 41, when connecting the milk box with the steam interface on the beverage machine, the main body component 20 may be prevented from being separated from the tube connector 30 during a process of forming pressure by injection of the steam flow, or the dislocation of the main body component 20 and the tube connector 30 caused by an accidental operation of a user may be avoided. For example, when inserting or pulling out the milk box, the main body component 20 is prevented from being separated from the milk box and remaining on a main body of the beverage machine. At this time, if a beverage is being made, it may cause harm to the human body, and the locking member being disposed may ensure that the use of the milk box is safer and more reliable.

In addition, an unlocking member 42 may be disposed on the milk box. The unlocking member 42 is connected to the locking member 41. The main body component 20 is provided with a clamping groove 25. A guide groove 39 is disposed at a position, corresponding to the clamping groove 25, on the tube connector 30. The guide groove 39 is communicated with the clamping groove 25, the locking member 41 extends into the clamping groove 25 from the guide groove 39, and the unlocking member 42 is configured to be operated to drive the locking member 41 to move along the guide groove 39 to be separated from the clamping groove 25. The main body component 20 and the tube connector 30 are locked by inserting the locking member 41 into the guide groove 39 and the clamping groove 25 at the same time, and thus this structure is simple and this operation is reliable.

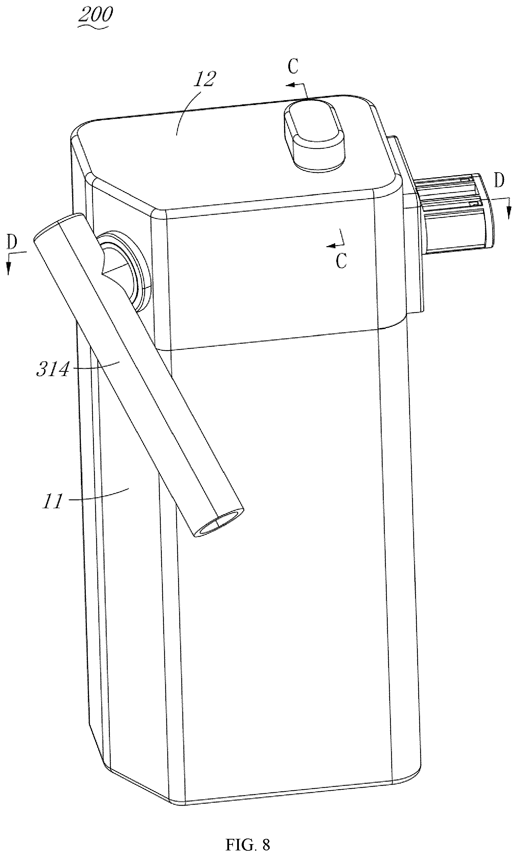

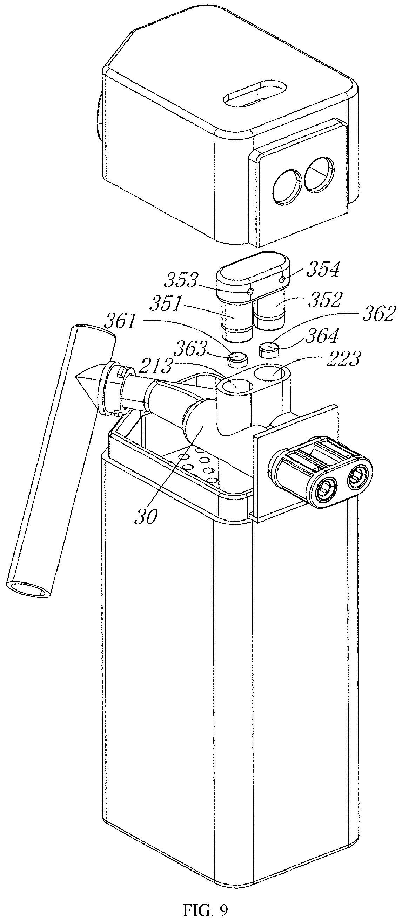

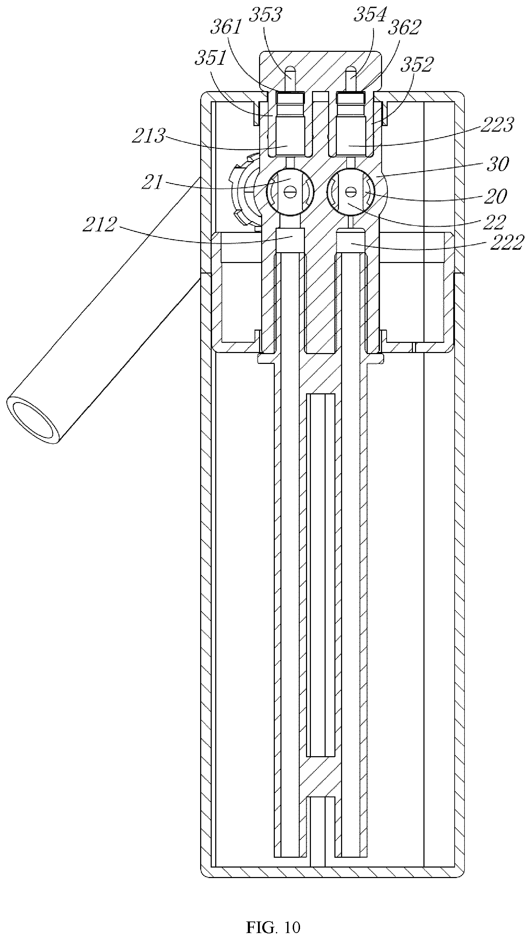

Referring to FIGS. 8 to 10, an emulsification device 200 is a second implementation of the present disclosure. Different from the first implementation, the emulsification device 200 includes a first sealing plug 351 extending into the first air channel 213 and a second sealing plug 352 extending into the second air channel 223. The first sealing plug 351 is provided with a first air inlet hole 353 configured to communicate external air and the first mixing chamber 21. The second sealing plug 352 is provided with a second air inlet hole 354 configured to communicate external air and the second mixing chamber 22. Exemplarily, the first sealing plug 351 is connected to a first sealing sheet 361, the second sealing plug 352 is connected to a second sealing sheet 362, the first sealing sheet 361 is provided with a first opening hole 363, and the second sealing sheet 362 is provided with a second opening hole 364. A hole cross-sectional area of the first opening hole 363 is constructed as the substantial inlet cross-sectional area of the first air channel 213 to the first mixing chamber 21, and a hole cross-sectional area of the second opening hole 364 is constructed as the substantial inlet cross-sectional area of the second air channel 223 to the second mixing chamber 22.

The sealing sheet can limit air to enter the mixing chamber only through the opening hole. By disposing the independent sealing sheet to form the opening hole, it is convenient for processing, and a diameter of the opening hole may be accurately processed, thereby accurately controlling the air intake quantity and ensuring a desired quality of the milk foam. In addition, the first sealing plug 351 and the second sealing plug 352 may be partially exposed relative to the milk box, and exposed parts are disposed as a conjoined structure. When the sealing plugs need to be removed, it is convenient to remove two sealing plugs at the same time.

In this implementation, the emulsification device 200 may also be provided with the locking member 41 and the unlocking member 42 in the above implementation to prevent the main body component 20 from being separated from the tube connector 30 during a process of forming pressure by injection of the steam flow. The specific structure may be the same as that in the above-mentioned implementation, or may be any structure, as long as the locking and operable unlocking of the main body component 20 and the tube connector 30 can be realized.

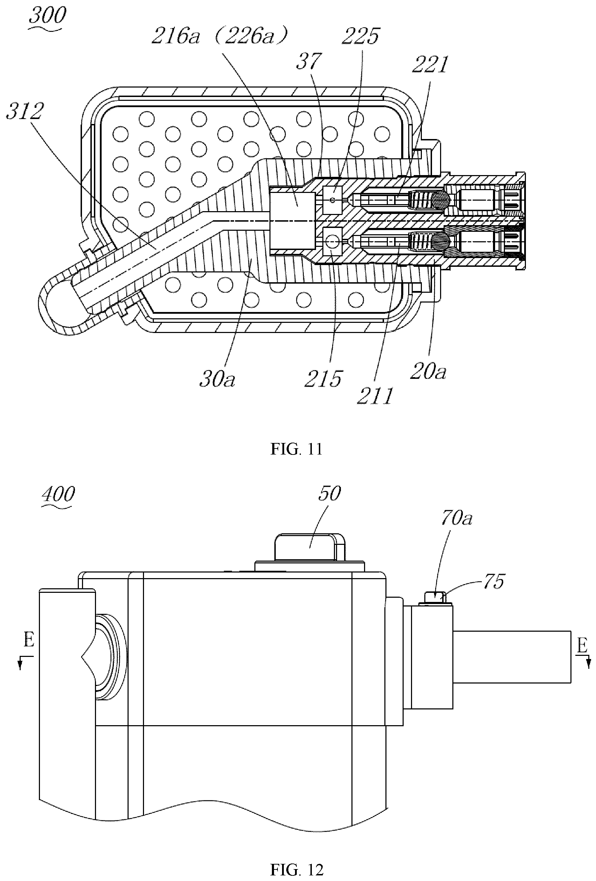

Referring to FIG. 11, an emulsification device 300 is a third implementation of the present disclosure. Different from the first implementation, the first mixing chamber 21 includes a first upstream mixing chamber 215 and a first downstream mixing chamber 216a, and the second mixing chamber 22 includes a second upstream mixing chamber 225 and a second downstream mixing chamber 226a; the first downstream mixing chamber 216a and the second downstream mixing chamber 226a constitute a downstream mixing chamber in communication with each other, along an outflow direction of a fluid, a cross-sectional area of the downstream mixing chamber is greater than a cross-sectional area of the first upstream mixing chamber 215, and the cross-sectional area of the downstream mixing chamber is greater than a cross-sectional area of the second upstream mixing chamber 225; a length of the downstream mixing chamber is greater than a length of the first upstream mixing chamber 215, and the length of the downstream mixing chamber is also greater than a length of the second upstream mixing chamber 225. This embodiment includes the following situation: the first upstream mixing chamber 215 and the second upstream mixing chamber 225 share the downstream mixing chamber, that is, the first downstream mixing chamber 216a and the second downstream mixing chamber 226a are the same mixing chamber. By sharing the downstream mixing chamber, the space of the downstream mixing chamber may be increased. Thus the air, liquid and steam may be foamed more fully, and the entire Venturi structure may be more compact.

In this embodiment, the Venturi structure includes a single main body component 20a and a tube connector 30a. The first steam channel 211 and the second steam channel 221 are disposed in the single main body component 20a at intervals. The first mixing chamber 21 and the second mixing chamber 22 are disposed in the tube connector 30a at intervals. The tube connector 30a includes a single connecting channel 37. The main body component 20a extends into the connecting channel 37. The outlet channel 312 is disposed in the tube connector 30a. The fit between the single main body component 20a and the tube connector 30a is simpler and the installation is convenient.

In this implementation, the emulsification device 300 may also be provided with the locking member and the unlocking member in the above implementation to prevent the main body component 20a from being separated from the tube connector 30a during a process of forming pressure by injection of the steam flow. The specific structure may be the same as that in the above-mentioned implementation, or may be any structure, as long as the locking and operable unlocking of the main body component 20a and the tube connector 30a can be realized.

Referring to FIGS. 12 to 14, an emulsification device 400 is a fourth implementation of the present disclosure. The emulsification device 400 includes a box 11 and a cover assembly 12 covering on the upper of the box 11, the box 11 has a liquid storage chamber configured to contain liquid, and the Venturi structure is disposed in the cover assembly 12. A switching apparatus 70a is disposed on the milk box or the cover assembly 12 of the milk box. The first steam channel 211 and the second steam channel 221 are connected to a single steam joint 73 through the switching apparatus 70a. The cover assembly 12 is provided with an operating part 75, and the operating part 75 may be constructed as a knob or a push button, the operating part 75 is configured to drive the switching apparatus 70a to move to switch the steam flow from the steam joint 73 to flow into the first mixing chamber 21 from the first steam channel 211 or to flow into the second mixing chamber 22 from the second steam channel 221.

In this implementation, the emulsification device 200 may also be provided with the locking member and the unlocking member in the above implementation to prevent the main body component 20b from being separated from the tube connector 30b during a process of forming pressure by injection of the steam flow. The specific structure may be the same as that in the above-mentioned implementation, or may be any structure, as long as the locking and operable unlocking of the main body component 20b and the tube connector 30b can be realized.

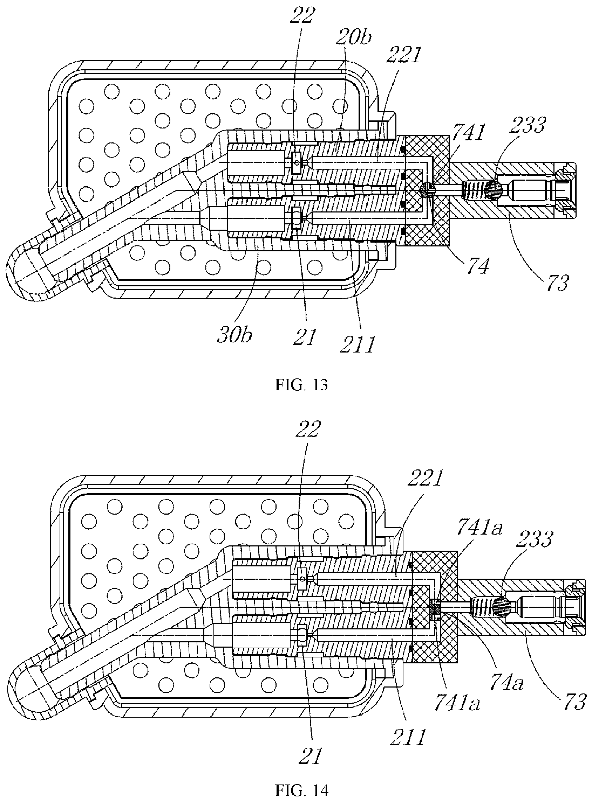

Referring to FIG. 13, the switching apparatus 70a includes a reversing member 74. The reversing member 74 is provided with a bent conversion channel 741. The reversing member 74 is operated to rotate through the operating part 75 outside the milk box to change a flow direction of the steam flow. The steam flow in the joint 73 flows to the first steam channel 211 or the second steam channel 221 through the conversion channel 741.

Referring to FIG. 14, a reversing member 74a is provided with two spaced conversion channels 741a. The reversing member 74a is operated to move through the operating part outside the milk box to change a flow direction of the steam flow. The steam flow in the steam joint 73 flows to the first steam channel 211 or the second steam channel 221 through one of the conversion channels 741a.

A single steam joint is disposed on the milk box, so that the single steam joint is conveniently fit with the single steam interface on the beverage machine. A check valve 233 is disposed on the steam joint. The structure of the check valve 233 is the same as that of the first implementation. The reversing member 74 may be disposed between the check valve 233 and the two steam channels. The switching apparatus 70a is disposed on the milk box, which may realize the output of hot or cold milk foam without changing the structure of the single steam interface of the beverage machine or disposing an adapter, thereby reducing costs.

In the above embodiment, through controlling the flow direction of the steam flow by the switching apparatus, a mixing chamber for fluid mixing is selected, and a mixing ratio of liquid and air is determined based on the first preset correspondence or the second preset correspondence. Liquid supply volumes and air supply volumes of two liquid channels are different, and the air supply volume corresponds to the liquid supply volume of each liquid channel. Therefore, milk foam with different temperatures and guaranteed quality may be produced, such as, cold milk foam with a temperature in a temperature range of 10°C to 30°C, and hot milk foam with a temperature in a temperature range of 40°C to 70°C. The emulsification device may output hot or cold milk foam with different temperature ranges, and thus milk foam of different tastes may be obtained to meet requirements of different users for more tastes.

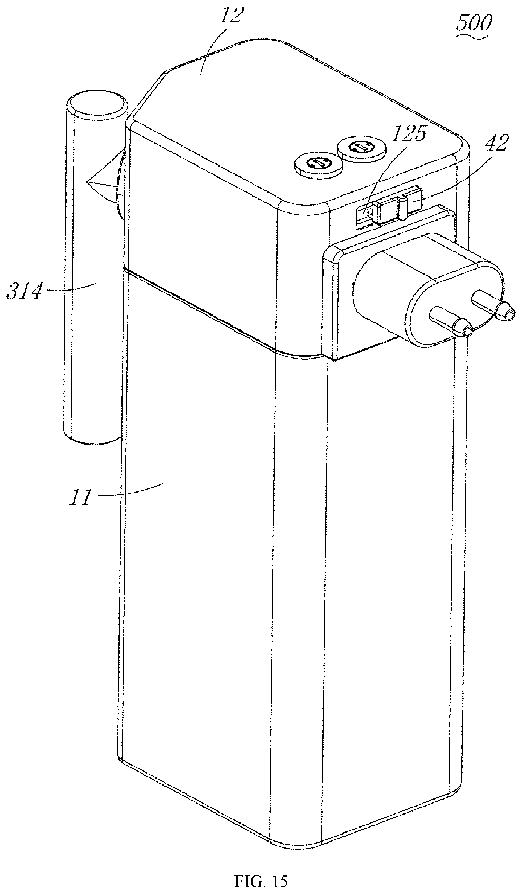

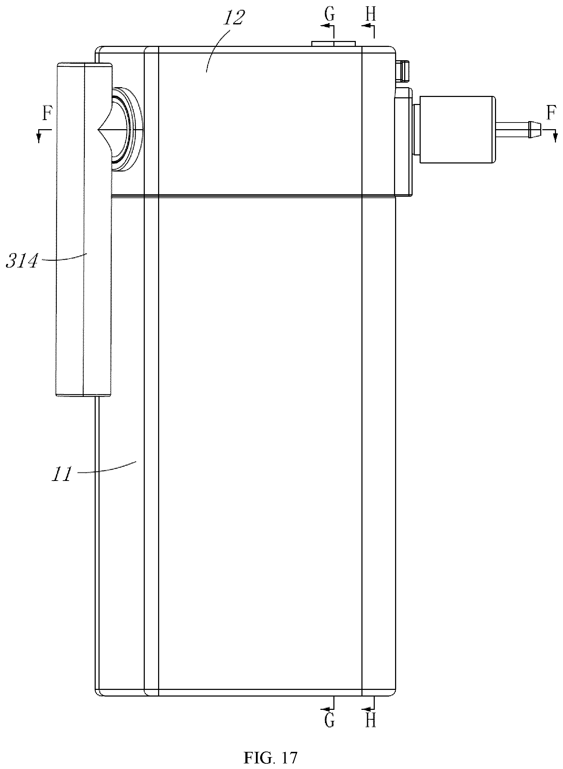

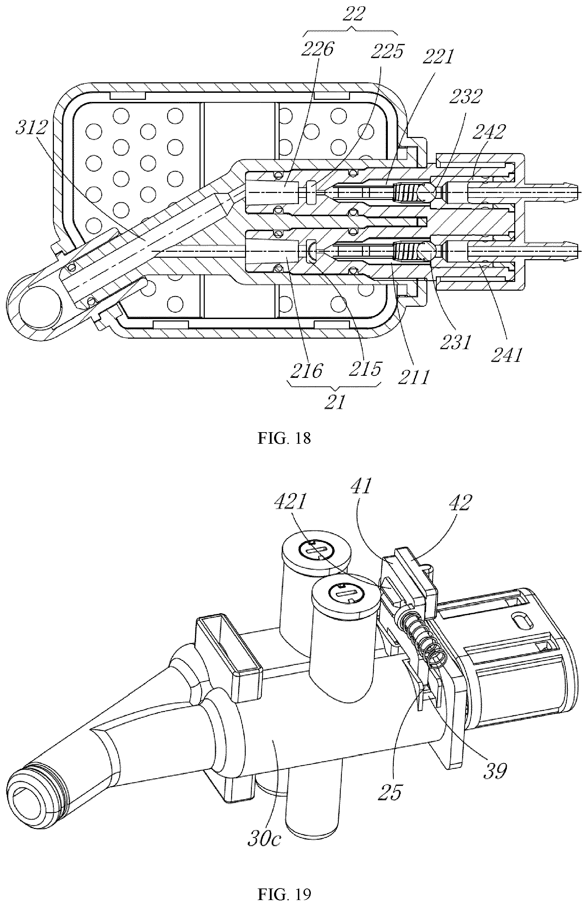

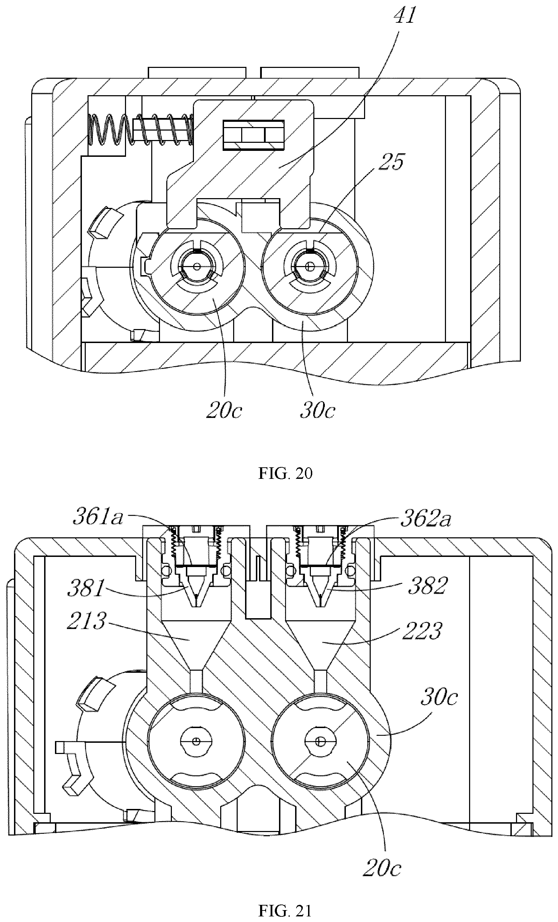

Referring to FIGS. 15 to 21, an emulsification device 500 is a fifth implementation of the present disclosure. Different from the first implementation, the first air channel 213 is connected to a first air valve 381, and the second air channel 223 is connected to a second air valve 382. The first air valve 381 is automatically opened based on a negative pressure formed in the first mixing chamber 21 to allow external air to enter the first mixing chamber 21. The second air valve 382 is automatically opened based on a negative pressure formed in the second mixing chamber 22 to allow external air to enter the second mixing chamber 22. The first air valve 381 is connected to a first sealing sheet 361a, the second air valve 382 is connected to a second sealing sheet 362a, and an inlet of the first air valve 381 is covered by the first sealing sheet 361a, an inlet of the second air valve 382 is covered by the second sealing sheet 362a. The first sealing sheet 361a is provided with a first opening hole 363a, and the second sealing sheet 362a is provided with a second opening hole 364a. The first air valve 381 is communicated with external air through the first opening hole 363a, and the second air valve 382 is communicated with external air through the second opening hole 364a. A hole cross-sectional area of the first opening hole 363a is constructed as the substantial inlet cross-sectional area of the first air channel 213 to the first mixing chamber 21, and a hole cross-sectional area of the second opening hole 364a is constructed as the substantial inlet cross-sectional area of the second air channel 223 to the second mixing chamber 22. An air valve and a sealing sheet may be fixed in an air channel through a sealing plug.

The air valve may ensure that the air channel is in a closed state when the milk box is not in use. The sealing sheet can limit the air to enter the mixing chamber only through the opening hole. By disposing the independent sealing sheet to form the opening hole, it is convenient for processing, and a diameter of the opening hole may be accurately processed, thereby accurately controlling the air intake quantity and ensuring a desired quality of the milk foam.

Further, a locking member 41 is disposed between a main body component 20c and a tube connector 30c, the locking member 41 is configured to be operated to move between two positions to allow and limit the main body component 20c to be separated from the tube connector 30c along an extending direction of a connecting channel. By disposing the locking member 41, when connecting the milk box with the steam interface on the beverage machine, the main body component 20c may be prevented from being separated from the tube connector 30c, or the dislocation of the main body component 20c and the tube connector 30c caused by an accidental operation of a user may be avoided, which may ensure that the use of the milk box is more reliable.

Specifically, an unlocking member 42 is disposed outside the milk box, and the unlocking member 42 is connected to the locking member 41. The main body component 20c is provided with a clamping groove 25. A guide groove 39 is disposed at a position, corresponding to the clamping groove 25, on the tube connector 30c. The guide groove 39 is communicated with the clamping groove 25, the locking member 41 extends into the clamping groove 25 from the guide groove 39, and the unlocking member 42 is configured to be operated to drive the locking member 41 to move along the guide groove 39 to be separated from the clamping groove 25. The main body component 20c and the tube connector 30c are locked by inserting the locking member 41 into the guide groove 39 and the clamping groove 25 at the same time, and thus this structure is simple and this operation is reliable.

The cover assembly 12 of the milk box is provided with an opening groove 125. The unlocking member 42 is connected to the locking member 41 through the opening groove 125. An extending direction of the opening groove 125 is consistent with a guiding direction of the guide groove 39, and the unlocking member 42 is configured to be operated to drive the locking member 41 to move along the opening groove 125 to be separated from the clamping groove 25. Users only need to perform an operation according to instructions to realize unlocking between the main body component 20c and the tube connector 30c. The unlocking member 42 is provided with a hook 421, and the locking member 41 is provided with an installation groove 411 corresponding to the opening groove 125. The hook 421 passes through the opening groove 125 to be clamped in the installation groove 411. It is convenient for the unlocking member 42 to be connected to the locking member 41 from the outside of the milk box.

The milk box includes a steam interface part configured to be connected to a steam source, and the unlocking member 42 and the steam interface part are located on the same side of the milk box or the cover assembly 12. In this way, when the milk box is connected to the beverage machine, users cannot operate the unlocking member 42, thereby preventing the main body component 20c and the tube connector 30c from being accidentally unlocked, or preventing the milk box from being pulled out while making a drink, which may cause harm to human body.

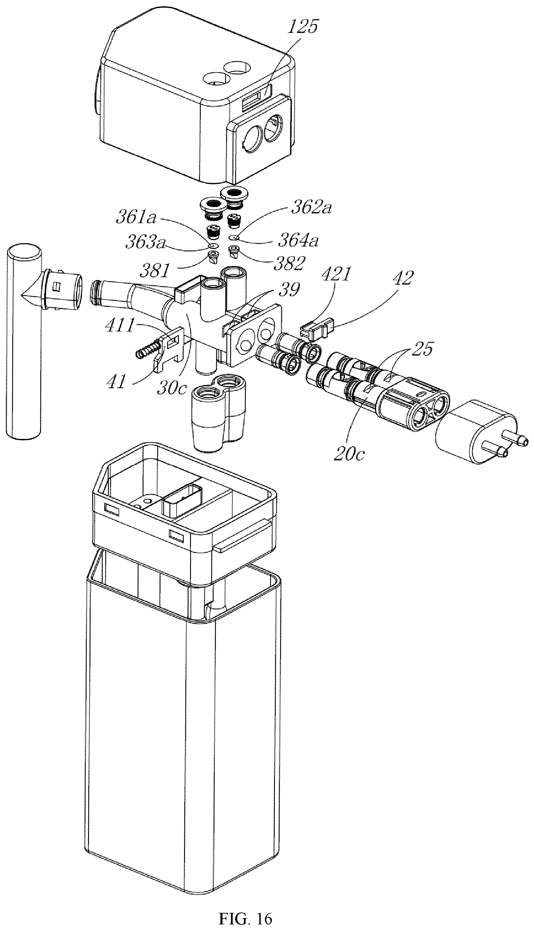

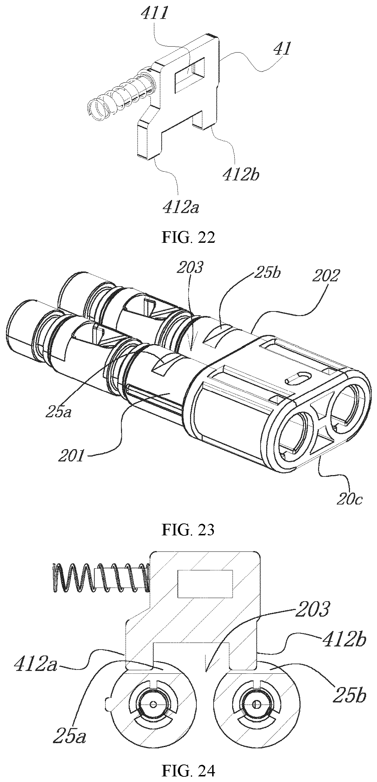

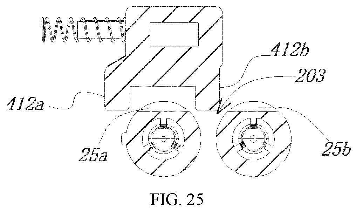

Referring to FIGS. 16, 22 and 23, the main body component 20c includes a first tubular main body 201 and a second tubular main body 202, and the locking member 41 includes a first latch part 412a and a second latch part 412b. Descriptions of the first tubular main body 201 and the second tubular main body 202 may be referred to the foregoing descriptions, and are not repeated here. The first tubular main body 201 is provided with a first clamping groove 25a, the second tubular main body 202 is provided with a second clamping groove 25b, and an avoidance space 203 is formed between the first tubular main body 201 and the second tubular main body 202. With reference to FIG.24, when the locking member 41 is located at a locking position, the first latch part 412a is located in the first clamping groove 25a, and the second latch part 412b is located in the second clamping groove 25b, to achieve locking. With reference to FIG.25, when the locking member 41 is located at an unlocking position, the first latch part 412a leaves the first clamping groove 25a, and the second latch part 412b leaves the second clamping groove 25b and is located in the avoidance space 203 to achieve unlocking. According to this structure, the locking member 41 may move between the locking position and the unlocking position in a shorter stroke, which helps to reduce the space occupation of the locking member 41, thereby helping to reduce the size of the emulsification equipment 500.

The present disclosure also relates to a beverage machine, which includes a beverage machine main body and the emulsification device in any of the above implementations. The first steam channel and the second steam channel of the emulsification device are alternatively communicated with the beverage machine main body. The beverage machine main body includes a steam source capable of producing steam. When the steam channel of the emulsification device is connected to the beverage machine main body, the steam source in the beverage machine main body provides steam to the emulsification device.

It should be understood that although this specification is described in terms of implementations, not each implementation only contains one independent technical solution. This description of the specification is only for the sake of clarity. Those skilled in the art should take the specification as a whole. The technical solutions in the implementations may also be appropriately combined to form other implementations that can be understood by those skilled in the art.

The series of detailed descriptions listed above are only specific descriptions of feasible implementations of the present disclosure. They are not intended to limit the protection scope of the present disclosure which is defined by the appended claims.

## Claims

1. An emulsification device (100, 200, 300, 400, 500) of a beverage machine, wherein the emulsification device (100, 200, 300, 400, 500) comprises a Venturi structure, the Venturi structure comprises a first mixing chamber (21) and a second mixing chamber (22), the first mixing chamber (21) is communicated with a first steam channel (211), a first liquid channel (212), a first air channel (213) and an outlet channel (312), the second mixing chamber (22) is communicated with a second steam channel (221), a second liquid channel (222), a second air channel (223) and the outlet channel (312), the first steam channel (211) and the second steam channel (221) are configured to selectively communicate with a steam source, the first liquid channel (212) and the second liquid channel (222) are configured to communicate with a liquid storage source, the first air channel (213) and the second air channel (223) are configured to communicate with air, and the outlet channel (312) is configured to output a milk foam produced by the first mixing chamber (21) or the second mixing chamber (22) based on a Venturi effect; in a case that the first steam channel (211) is communicated with the steam source, steam flows through the first steam channel (211) into the first mixing chamber (21) to produce a milk foam with a first temperature based on the Venturi effect; and in a case that the second steam channel (221) is communicated with the steam source, steam flows through the second steam channel (221) into the second mixing chamber (22) to produce a milk foamwith a second temperature based on the Venturi effect, **characterized in that** the first temperature is in a temperature range of 10°C to 30°C, and the second temperature in a temperature range of 40°C to 70°C; and that the emulsification device comprises a box (11) and a cover assembly (12) covering on the upper of the box (11), the box (11) comprises a liquid storage chamber configured to contain liquid, and the Venturi structure is disposed in the cover assembly (12).

2. The emulsification device (100, 200, 300, 400, 500) according to claim 1, wherein a substantial inlet cross-sectional area of the first liquid channel (212) to the first mixing chamber (21) is greater than a substantial inlet cross-sectional area of the second liquid channel (222) to the second mixing chamber (22).

3. The emulsification device (100, 200, 300, 400, 500) according to claim 2, wherein the substantial inlet cross-sectional area of the first liquid channel (212) to the first mixing chamber (21) is greater than or equal to S1, the substantial inlet cross-sectional area of the second liquid channel (222) to the second mixing chamber (22) is less than or equal to S2, and S1 > 3 * S2.

4. The emulsification device (100, 200, 300, 400, 500) according to any one of claims 1 to 3, wherein each mixing chamber in at last one mixing chamber of the first mixing chamber (21) and the second mixing chamber (22) comprises an upstream mixing chamber (215, 225) and a downstream mixing chamber (216, 226),
wherein along a flow direction from the upstream mixing chamber (215, 225) to the downstream mixing chamber (216, 226), a length of the upstream mixing chamber (215, 225) is less than a length of the downstream mixing chamber (216, 226); and/or,
a cross-sectional area of the upstream mixing chamber (215, 225) is less than a cross-sectional area of the downstream mixing chamber (216, 226).

5. The emulsification device (100, 200, 300, 400, 500) according to any one of claims 1 to 4, wherein a check valve (231, 232) is disposed in each steam channel in at least one steam channel of the first steam channel (211) and the second steam channel (221), and the check valve (231, 232) is allowed to open along a direction of steam flowing into a corresponding mixing chamber.

6. The emulsification device (100, 200, 300, 400, 500) according to claim 5, wherein a joint sealing sleeve (241, 242) is disposed in the steam channel, and the check valve (231, 232) is limited between a step part of the steam channel and the joint sealing sleeve (241, 242).

7. The emulsification device (100, 200, 300, 400, 500) according to any one of claims 1 to 6, wherein each air channel in at least one air channel of the first air channel (213) and the second air channel (223) is connected to an air valve (381, 382), the air valve (381, 382) is automatically opened based on a negative pressure formed in a mixing chamber (21, 22) communicated with the air channel to allow external air to enter the mixing chamber (21, 22), the air valve (381, 382) is connected to a sealing sheet (361, 362, 361a, 362a), an inlet of the air valve (381, 382) is covered by the sealing sheet (361, 362, 361a, 362a), the sealing sheet (361, 362, 361a, 362a) is provided with an opening hole (363, 364, 363a, 364a), the air valve (381, 382) is communicated with external air through the opening hole (363, 364, 363a, 364a), and a hole cross-sectional area of the opening hole (363, 364, 363a, 364a) is constructed as a substantial inlet cross-sectional area of the air channel to the mixing chamber (21, 22).

8. The emulsification device (100, 200, 300, 400, 500) according to any one of claims 1 to 6, wherein an upstream part of the first air channel (213) and an upstream part of the second air channel (223) are communicated with each other to form an air hole (33), and the emulsification device (100, 200, 300, 400, 500) further comprises a seal (34) at least partially extending into the air hole (33); one of an outer wall of the seal (34) and an inner wall of the air hole (33) is provided with a first variable cross-section intake groove (341) and a second variable cross-section intake groove (342) that extend longitudinally; the other of the outer wall of the seal (34) and the inner wall of the air hole (33) is provided with a first sealing convex rib (331) and a second sealing convex rib (332); the first variable cross-section intake groove (341) is communicated with the first air channel (213), the second variable cross-section intake groove (342) is communicated with the second air channel (223), the first sealing convex rib (331) is fit with the first variable cross-section intake groove (341) to change an air intake quantity of the first air channel (213), and the second sealing convex rib (332) is fit with the second variable cross-section intake groove (342) to change an air intake quantity of the second air channel (223).

9. The emulsification device (100, 200, 300, 400, 500) according to any one of claims 1 to 8, wherein the Venturi structure further comprises a first tubular main body (201), a second tubular main body (202) and a tube connector (30, 30a, 30b, 30c), the first steam channel (211) is disposed in the first tubular main body (201), the second steam channel (221) is disposed in the second tubular main body (202), the tube connector (30, 30a, 30b, 30c) comprises a first connecting channel (31) and a second connecting channel (32) disposed at intervals, the first tubular main body (201) extends into the first connecting channel (31), the second tubular main body (202) extends into the second connecting channel (32), and the outlet channel (312) is disposed in the tube connector (30, 30a, 30b, 30c).

10. The emulsification device (100, 200, 300, 400, 500) according to claim 9, wherein the first tubular main body (201) comprises a first inner section (203) extending into the first connecting channel (31) and a first outer section (204) exposed from the first connecting channel (31), the second tubular main body (202) comprises a second inner section (205) extending into the second connecting channel (32) and a second outer section (206) exposed from the second connecting channel (32), the first outer section (204) and the second outer section (206) are integrally formed to make the first tubular main body (201) and the second tubular main body (202) integrally form a main body component, the first liquid channel (212) penetrates through a tube wall of the first connecting channel (31) to communicate with the first mixing chamber (21), and the second liquid channel (222) penetrates through a tube wall of the second connecting channel (32) to communicate with the second mixing chamber (22).

11. The emulsification device (100, 200, 300, 400, 500) according to claim 10, wherein the emulsification device (100, 200, 300, 400, 500) further comprises a locking member (41) is disposed between the main body component (20, 20a, 20b, 20c) and the tube connector (30, 30a, 30b, 30c), and the locking member (41) is configured to be operated to move between two positions to selectively allow and limit the main body component (20, 20a, 20b, 20c) to be separated from the tube connector (30, 30a, 30b, 30c).

12. The emulsification device (100, 200, 300, 400, 500) according to claim 11, wherein the main body component (20, 20a, 20b, 20c) is provided with a clamping groove (25, 25a, 25b), a guide groove (39) is disposed on the tube connector (30, 30a, 30b, 30c), the guide groove (39) is communicated with the clamping groove (25, 25a, 25b), the locking member (41) passes through the guide groove (39) and partially extends into the clamping groove (25, 25a, 25b), and the locking member (41) is configured to be driven to switch between a locking position and an unlocking position relative to the main body component (20, 20a, 20b, 20c) and the tube connector (30, 30a, 30b, 30c); when the locking member (41) is located at the locking position, the locking member (41) partially extends into the clamping groove (25, 25a, 25b); when the locking member (41) is located at the unlocking position, the locking member (41) leaves the clamping groove (25, 25a, 25b); and the emulsification device (100, 200, 300, 400, 500) further comprises an unlocking member (42), the cover assembly (12) is provided with an opening groove (125), the unlocking member (42) comprises an unlocking part and a hook (421), the locking member (41) is provided with an installation groove (411), the unlocking part is exposed outside the cover assembly (12), the hook (421) passes through the opening groove (125) and at least partially extends into the installation groove (411), and an extension direction of the opening groove (125) is parallel to a guiding direction of the guide groove (39).

13. The emulsification device (100, 200, 300, 400, 500) according to any one of claims 1 to 12, wherein the emulsification device (100, 200, 300, 400, 500) further comprises a switching apparatus (70, 70a), the first steam channel (211) and the second steam channel (221) are connected to a single steam joint (73) through the switching apparatus (70, 70a), and the switching apparatus (70, 70a) is configured to control the first steam channel (211) or the second steam channel (221) to selectively communicate with the steam source; or, the beverage machine comprises a beverage machine main body and the emulsification device (100, 200, 300, 400, 500), the beverage machine main body comprises a switching apparatus (70, 70a), and the switching apparatus (70, 70a) is configured to control the first steam channel (211) or the second steam channel (221) to selectively communicate with the steam source.

14. A beverage machine, comprising:
the emulsification device (100, 200, 300, 400, 500) according to any one of claims 1 to 13; and
a steam source, wherein the first steam channel (211) and the second steam channel (221) of the emulsification device (100, 200, 300, 400, 500) are selectively communicated with the steam source.

## Patentansprüche

1. Eine Emulgiervorrichtung (100, 200, 300, 400, 500) einer Getränkemaschine, wobei die Emulgiervorrichtung (100, 200, 300, 400, 500) eine Venturi-Struktur beinhaltet, die Venturi-Struktur eine erste Mischkammer (21) und eine zweite Mischkammer (22) beinhaltet, die erste Mischkammer (21) mit einem ersten Dampfkanal (211), einem ersten Flüssigkeitskanal (212), einem ersten Luftkanal (213) und einem Auslasskanal (312) in Kommunikation gebracht ist, die zweite Mischkammer (22) mit einem zweiten Dampfkanal (221), einem zweiten Flüssigkeitskanal (222), einem zweiten Luftkanal (223) und dem Auslasskanal (312) in Kommunikation gebracht ist, der erste Dampfkanal (211) und der zweite Dampfkanal (221) konfiguriert sind, um selektiv mit einer Dampfquelle zu kommunizieren, der erste Flüssigkeitskanal (212) und der zweite Flüssigkeitskanal (222) konfiguriert sind, um mit einer Flüssigkeitsspeicherquelle zu kommunizieren, der erste Luftkanal (213) und der zweite Luftkanal (223) konfiguriert sind, um mit der Luft zu kommunizieren, und der Auslasskanal (312) konfiguriert ist, um einen Milchschaum auszugeben, der durch die erste Mischkammer (21) oder die zweite Mischkammer (22) auf der Basis eines Venturi-Effekts produziert wird; wobei in einem Fall, dass der erste Dampfkanal (211) mit der Dampfquelle in Kommunikation gebracht ist, Dampf durch den ersten Dampfkanal (211) in die erste Mischkammer (21) strömt, um auf der Basis des Venturi-Effekts einen Milchschaum mit einer ersten Temperatur zu produzieren; und wobei in einem Fall, dass der zweite Dampfkanal (221) mit der Dampfquelle in Kommunikation gebracht ist, Dampf durch den zweiten Dampfkanal (221) in die zweite Mischkammer (22) strömt, um auf der Basis des Venturi-Effekts einen Milchschaum mit einer zweiten Temperatur zu produzieren, **dadurch gekennzeichnet, dass** die erste Temperatur in einem Temperaturbereich von 10 °C bis 30 °C liegt und die zweite Temperatur in einem Temperaturbereich von 40 °C bis 70 °C liegt; und dass die Emulgiervorrichtung einen Kasten (11) und eine Abdeckanordnung (12), die auf der Oberseite des Kastens (11) abdeckt, beinhaltet, der Kasten (11) eine Flüssigkeitsspeicherkammer beinhaltet, die konfiguriert ist, um Flüssigkeit zu enthalten, und die Venturi-Struktur in der Abdeckanordnung (12) angeordnet ist.

2. Emulgiervorrichtung (100, 200, 300, 400, 500) gemäß Anspruch 1, wobei eine wesentliche Einlassquerschnittsfläche des ersten Flüssigkeitskanals (212) in die erste Mischkammer (21) größer ist als eine wesentliche Einlassquerschnittsfläche des zweiten Flüssigkeitskanals (222) in die zweite Mischkammer (22).

3. Emulgiervorrichtung (100, 200, 300, 400, 500) gemäß Anspruch 2, wobei die wesentliche Einlassquerschnittsfläche des ersten Flüssigkeitskanals (212) in die erste Mischkammer (21) größer als oder gleich S1 ist, die wesentliche Einlassquerschnittsfläche des zweiten Flüssigkeitskanals (222) in die zweite Mischkammer (22) kleiner als oder gleich S2 ist und S1 > 3 * S2.

4. Emulgiervorrichtung (100, 200, 300, 400, 500) gemäß einem der Ansprüche 1 bis 3, wobei jede Mischkammer in mindestens einer Mischkammer von der ersten Mischkammer (21) und der zweiten Mischkammer (22) eine stromaufwärtige Mischkammer (215, 225) und eine stromabwärtige Mischkammer (216, 226) beinhaltet,
wobei entlang einer Strömungsrichtung von der stromaufwärtigen Mischkammer (215, 225) zu der stromabwärtigen Mischkammer (216, 226) eine Länge der stromaufwärtigen Mischkammer (215, 225) kleiner ist als eine Länge der stromabwärtigen Mischkammer (216, 226); und/oder
eine Querschnittsfläche der stromaufwärtigen Mischkammer (215, 225) kleiner ist als eine Querschnittsfläche der stromabwärtigen Mischkammer (216, 226).

5. Emulgiervorrichtung (100, 200, 300, 400, 500) gemäß einem der Ansprüche 1 bis 4, wobei in jedem Dampfkanal in mindestens einem Dampfkanal von dem ersten Dampfkanal (211) und dem zweiten Dampfkanal (221) ein Rückschlagventil (231, 232) angeordnet ist und dem Rückschlagventil (231, 232) ermöglicht wird, sich entlang einer Richtung des Dampfstroms in eine entsprechende Mischkammer zu öffnen.

6. Emulgiervorrichtung (100, 200, 300, 400, 500) gemäß Anspruch 5, wobei eine Anschlussdichtungshülse (241, 242) in dem Dampfkanal angeordnet ist und das Rückschlagventil (231, 232) zwischen einem Stufenteil des Dampfkanals und der Anschlussdichtungshülse (241, 242) begrenzt ist.

7. Emulgiervorrichtung (100, 200, 300, 400, 500) gemäß einem der Ansprüche 1 bis 6, wobei jeder Luftkanal in mindestens einem Luftkanal von dem ersten Luftkanal (213) und dem zweiten Luftkanal (223) mit einem Luftventil (381, 382) verbunden ist, das Luftventil (381, 382) automatisch auf der Basis eines Unterdrucks geöffnet wird, der in einer Mischkammer (21, 22) gebildet wird, die mit dem Luftkanal in Kommunikation gebracht ist, um zu ermöglichen, dass Außenluft in die Mischkammer (21, 22) eintritt, wobei das Luftventil (381, 382) mit einem Dichtungsblatt (361, 362, 361a, 362a) verbunden ist, ein Einlass des Luftventils (381, 382) von dem Dichtungsblatt (361, 362, 361a, 362a) abgedeckt ist, das Dichtungsblatt (361, 362, 361a, 362a) mit einem Öffnungsloch (363, 364, 363a, 364a) versehen ist, das Luftventil (381, 382) mit Außenluft durch das Öffnungsloch (363, 364, 363a, 364a) in Kommunikation gebracht ist und eine Lochquerschnittsfläche des Öffnungslochs (363, 364, 363a, 364a) als eine wesentliche Einlassquerschnittsfläche des Luftkanals in die Mischkammer (21, 22) konstruiert ist.

8. Emulgiervorrichtung (100, 200, 300, 400, 500) gemäß einem der Ansprüche 1 bis 6, wobei ein stromaufwärtiger Teil des ersten Luftkanals (213) und ein stromaufwärtiger Teil des zweiten Luftkanals (223) miteinander in Kommunikation gebracht sind, um ein Luftloch (33) zu bilden, und die Emulgiervorrichtung (100, 200, 300, 400, 500) ferner eine Dichtung (34) beinhaltet, die sich mindestens teilweise in das Luftloch (33) erstreckt; wobei eine von einer äußeren Wand der Dichtung (34) und einer inneren Wand des Luftlochs (33) mit einer ersten Einlassnut mit variablem Querschnitt (341) und einer zweiten Einlassnut mit variablem Querschnitt (342) versehen ist, die sich in Längsrichtung erstrecken; wobei die andere von der äußeren Wand der Dichtung (34) und der inneren Wand des Luftlochs (33) mit einer ersten konvexen Dichtungsrippe (331) und einer zweiten konvexen Dichtungsrippe (332) versehen ist; die erste Einlassnut mit variablem Querschnitt (341) mit dem ersten Luftkanal (213) in Kommunikation gebracht ist, die zweite Einlassnut mit variablem Querschnitt (342) mit dem zweiten Luftkanal (223) in Kommunikation gebracht ist, die erste konvexe Dichtungsrippe (331) mit der ersten Einlassnut mit variablem Querschnitt (341) zusammengepasst ist, um eine Lufteinlassmenge des ersten Luftkanals (213) zu ändern, und die zweite konvexe Dichtungsrippe (332) mit der zweiten Einlassnut mit variablem Querschnitt (342) zusammengepasst ist, um eine Lufteinlassmenge des zweiten Luftkanals (223) zu ändern.

9. Emulgiervorrichtung (100, 200, 300, 400, 500) gemäß einem der Ansprüche 1 bis 8, wobei die Venturi-Struktur ferner einen ersten rohrförmigen Hauptkörper (201), einen zweiten rohrförmigen Hauptkörper (202) und einen Rohrverbinder (30, 30a, 30b, 30c) beinhaltet, der erste Dampfkanal (211) in dem ersten rohrförmigen Hauptkörper (201) angeordnet ist, der zweite Dampfkanal (221) in dem zweiten rohrförmigen Hauptkörper (202) angeordnet ist, der Rohrverbinder (30, 30a, 30b, 30c) einen ersten Verbindungskanal (31) und einen zweiten Verbindungskanal (32) beinhaltet, die in Abständen angeordnet sind, sich der erste rohrförmige Hauptkörper (201) in den ersten Verbindungskanal (31) erstreckt, sich der zweite rohrförmige Hauptkörper (202) in den zweiten Verbindungskanal (32) erstreckt und der Auslasskanal (312) in dem Rohrverbinder (30, 30a, 30b, 30c) angeordnet ist.

10. Emulgiervorrichtung (100, 200, 300, 400, 500) gemäß Anspruch 9, wobei der erste rohrförmige Hauptkörper (201) einen ersten inneren Abschnitt (203), der sich in den ersten Verbindungskanal (31) erstreckt, und einen ersten äußeren Abschnitt (204), der von dem ersten Verbindungskanal (31) freiliegt, beinhaltet, der zweite rohrförmige Hauptkörper (202) einen zweiten inneren Abschnitt (205), der sich in den zweiten Verbindungskanal (32) erstreckt, und einen zweiten äußeren Abschnitt (206), der von dem zweiten Verbindungskanal (32) freiliegt, beinhaltet, der erste äußere Abschnitt (204) und der zweite äußere Abschnitt (206) integral gebildet sind, um den ersten rohrförmigen Hauptkörper (201) und den zweiten rohrförmigen Hauptkörper (202) integral zu einer Hauptkörperkomponente zu bilden, der erste Flüssigkeitskanal (212) eine Rohrwand des ersten Verbindungskanals (31) durchdringt, um mit der ersten Mischkammer (21) zu kommunizieren, und der zweite Flüssigkeitskanal (222) eine Rohrwand des zweiten Verbindungskanals (32) durchdringt, um mit der zweiten Mischkammer (22) zu kommunizieren.

11. Emulgiervorrichtung (100, 200, 300, 400, 500) gemäß Anspruch 10, wobei die Emulgiervorrichtung (100, 200, 300, 400, 500) ferner ein Verriegelungselement (41) beinhaltet, das zwischen der Hauptkörperkomponente (20, 20a, 20b, 20c) und dem Rohrverbinder (30, 30a, 30b, 30c) angeordnet ist, und das Verriegelungselement (41) konfiguriert ist, um betätigt zu werden, um sich zwischen zwei Positionen zu bewegen, um das Trennen der Hauptkörperkomponente (20, 20a, 20b, 20c) von dem Rohrverbinder (30, 30a, 30b, 30c) selektiv zu ermöglichen und zu begrenzen.

12. Emulgiervorrichtung (100, 200, 300, 400, 500) gemäß Anspruch 11, wobei die Hauptkörperkomponente (20, 20a, 20b, 20c) mit einer Klemmnut (25, 25a, 25b) versehen ist, eine Führungsnut (39) an dem Rohrverbinder (30, 30a, 30b, 30c) angeordnet ist, die Führungsnut (39) mit der Klemmnut (25, 25a, 25b) in Kommunikation gebracht ist, das Verriegelungselement (41) durch die Führungsnut (39) verläuft und sich teilweise in die Klemmnut (25, 25a, 25b) erstreckt, und das Verriegelungselement (41) konfiguriert ist, um angetrieben zu werden, um zwischen einer Verriegelungsposition und einer Entriegelungsposition relativ zu der Hauptkörperkomponente (20, 20a, 20b, 20c) und dem Rohrverbinder (30, 30a, 30b, 30c) umzuschalten; wobei, wenn sich das Verriegelungselement (41) in der Verriegelungsposition befindet, sich das Verriegelungselement (41) teilweise in die Klemmnut (25, 25a, 25b) erstreckt; wobei, wenn sich das Verriegelungselement (41) in der Entriegelungsposition befindet, das Verriegelungselement (41) die Klemmnut (25, 25a, 25b) verlässt; und wobei die Emulgiervorrichtung (100, 200, 300, 400, 500) ferner ein Entriegelungselement (42) beinhaltet, die Abdeckanordnung (12) mit einer Öffnungsnut (125) versehen ist, das Entriegelungselement (42) einen Entriegelungsteil und einen Haken (421) beinhaltet, das Verriegelungselement (41) mit einer Installationsnut (411) versehen ist, der Entriegelungsteil außerhalb der Abdeckanordnung (12) freiliegt, der Haken (421) durch die Öffnungsnut (125) verläuft und sich mindestens teilweise in die Installationsnut (411) erstreckt und eine Erstreckungsrichtung der Öffnungsnut (125) parallel zu einer Führungsrichtung der Führungsnut (39) ist.

13. Emulgiervorrichtung (100, 200, 300, 400, 500) gemäß einem der Ansprüche 1 bis 12, wobei die Emulgiervorrichtung (100, 200, 300, 400, 500) ferner eine Schalteinrichtung (70, 70a) beinhaltet, der erste Dampfkanal (211) und der zweite Dampfkanal (221) durch die Schalteinrichtung (70, 70a) mit einem einzelnen Dampfanschluss (73) verbunden sind und die Schalteinrichtung (70, 70a) konfiguriert ist, um den ersten Dampfkanal (211) oder den zweiten Dampfkanal (221) zu steuern, sodass dieser selektiv mit der Dampfquelle kommuniziert; oder wobei die Getränkemaschine einen Getränkemaschinenhauptkörper und die Emulgiervorrichtung (100, 200, 300, 400, 500) beinhaltet, der Getränkemaschinenhauptkörper eine Schalteinrichtung (70, 70a) beinhaltet und die Schalteinrichtung (70, 70a) konfiguriert ist, um den ersten Dampfkanal (211) oder den zweiten Dampfkanal (221) zu steuern, sodass dieser selektiv mit der Dampfquelle kommuniziert.

14. Eine Getränkemaschine, die Folgendes beinhaltet:
die Emulgiervorrichtung (100, 200, 300, 400, 500) gemäß einem der Ansprüche 1 bis 13; und
eine Dampfquelle, wobei der erste Dampfkanal (211) und der zweite Dampfkanal (221) der Emulgiervorrichtung (100, 200, 300, 400, 500) selektiv mit der Dampfquelle in Kommunikation gebracht werden.

## Revendications

1. Un dispositif d'émulsification (100, 200, 300, 400, 500) d'une machine à boissons, le dispositif d'émulsification (100, 200, 300, 400, 500) comprenant une structure Venturi, la structure Venturi comprenant une première chambre de mélange (21) et une deuxième chambre de mélange (22), la première chambre de mélange (21) étant mise en communication avec une première voie de vapeur (211), une première voie de liquide (212), une première voie d'air (213) et une voie de sortie (312), la deuxième chambre de mélange (22) étant mise en communication avec une deuxième voie de vapeur (221), une deuxième voie de liquide (222), une deuxième voie d'air (223) et la voie de sortie (312), la première voie de vapeur (211) et la deuxième voie de vapeur (221) étant configurées pour communiquer sélectivement avec une source de vapeur, la première voie de liquide (212) et la deuxième voie de liquide (222) étant configurées pour communiquer avec une source de stockage de liquide, la première voie d'air (213) et la deuxième voie d'air (223) étant configurées pour communiquer avec de l'air, et la voie de sortie (312) étant configurée pour faire sortir une mousse de lait produite par la première chambre de mélange (21) ou la deuxième chambre de mélange (22) sur la base d'un effet Venturi ; dans le cas où la première voie de vapeur (211) est mise en communication avec la source de vapeur, de la vapeur rentre par la première voie de vapeur (211) dans la première chambre de mélange (21) pour produire une mousse de lait ayant une première température sur la base de l'effet Venturi ; et dans le cas où la deuxième voie de vapeur (221) est mise en communication avec la source de vapeur, de la vapeur rentre par la deuxième voie de vapeur (221) dans la deuxième chambre de mélange (22) pour produire une mousse de lait ayant une deuxième température sur la base de l'effet Venturi, **caractérisé en ce que** la première température est comprise dans une plage de température allant de 10 °C à 30 °C, et la deuxième température est comprise dans une plage de température allant de 40 °C à 70 °C ; et **en ce que** le dispositif d'émulsification comprend une boîte (11) et un ensemble couvercle (12) couvrant le haut de la boîte (11), la boîte (11) comprend une chambre de stockage de liquide configurée pour contenir du liquide, et la structure Venturi est disposée dans l'ensemble couvercle (12).

2. Le dispositif d'émulsification (100, 200, 300, 400, 500) selon la revendication 1, dans lequel une aire de section transversale d'entrée substantielle de la première voie de liquide (212) arrivant à la première chambre de mélange (21) est supérieure à une aire de section transversale d'entrée substantielle de la deuxième voie de liquide (222) arrivant à la deuxième chambre de mélange (22).

3. Le dispositif d'émulsification (100, 200, 300, 400, 500) selon la revendication 2, dans lequel l'aire de section transversale d'entrée substantielle de la première voie de liquide (212) arrivant à la première chambre de mélange (21) est supérieure ou égale à S1, l'aire de section transversale d'entrée substantielle de la deuxième voie de liquide (222) arrivant à la deuxième chambre de mélange (22) est inférieure ou égale à S2, et S1 > 3 × S2.

4. Le dispositif d'émulsification (100, 200, 300, 400, 500) selon l'une quelconque des revendications 1 à 3, dans lequel chaque chambre de mélange d'au moins une chambre de mélange parmi la première chambre de mélange (21) et la deuxième chambre de mélange (22) comprend une chambre de mélange amont (215, 225) et une chambre de mélange aval (216, 226),
dans lequel le long d'une direction d'écoulement allant de la chambre de mélange amont (215, 225) à la chambre de mélange aval (216, 226), une longueur de la chambre de mélange amont (215, 225) est inférieure à une longueur de la chambre de mélange aval (216, 226) ; et/ou
une aire de section transversale de la chambre de mélange amont (215, 225) est inférieure à une aire de section transversale de la chambre de mélange aval (216, 226).

5. Le dispositif d'émulsification (100, 200, 300, 400, 500) selon l'une quelconque des revendications 1 à 4, dans lequel un clapet antiretour (231, 232) est disposé dans chaque voie de vapeur d'au moins une voie de vapeur parmi la première voie de vapeur (211) et la deuxième voie de vapeur (221), et il est permis au clapet antiretour (231, 232) de s'ouvrir dans un sens dans lequel de la vapeur rentre dans une chambre de mélange correspondante.

6. Le dispositif d'émulsification (100, 200, 300, 400, 500) selon la revendication 5, dans lequel un manchon d'étanchéité de joint (241, 242) est disposé dans la voie de vapeur, et le clapet antiretour (231, 232) est limité entre une partie épaulement de la voie de vapeur et le manchon d'étanchéité de joint (241, 242).

7. Le dispositif d'émulsification (100, 200, 300, 400, 500) selon l'une quelconque des revendications 1 à 6, dans lequel chaque voie d'air d'au moins une voie d'air parmi la première voie d'air (213) et la deuxième voie d'air (223) est raccordée à un clapet d'air (381, 382), le clapet d'air (381, 382) s'ouvre automatiquement sur la base d'une dépression formée dans une chambre de mélange (21, 22) mise en communication avec la voie d'air pour permettre à de l'air externe d'entrer dans la chambre de mélange (21, 22), le clapet d'air (381, 382) est raccordé à une feuille d'étanchéité (361, 362, 361a, 362a), une entrée du clapet d'air (381, 382) est couverte par la feuille d'étanchéité (361, 362, 361a, 362a), la feuille d'étanchéité (361, 362, 361a, 362a) est pourvue d'un trou d'ouverture (363, 364, 363a, 364a), le clapet d'air (381, 382) est mis en communication avec de l'air externe par le trou d'ouverture (363, 364, 363a, 364a), et une aire de section transversale de trou du trou d'ouverture (363, 364, 363a, 364a) est construite comme une aire de section transversale d'entrée substantielle de la voie d'air arrivant à la chambre de mélange (21, 22).

8. Le dispositif d'émulsification (100, 200, 300, 400, 500) selon l'une quelconque des revendications 1 à 6, dans lequel une partie amont de la première voie d'air (213) et une partie amont de la deuxième voie d'air (223) sont mises en communication l'une avec l'autre pour former un trou d'air (33), le dispositif d'émulsification (100, 200, 300, 400, 500) comprenant en outre un joint d'étanchéité (34) rentrant au moins partiellement dans le trou d'air (33) ; une paroi parmi une paroi extérieure du joint d'étanchéité (34) et une paroi intérieure du trou d'air (33) est pourvue d'une première rainure d'admission à section transversale variable (341) et d'une deuxième rainure d'admission à section transversale variable (342) qui s'étendent longitudinalement ; l'autre paroi parmi la paroi extérieure du joint d'étanchéité (34) et la paroi intérieure du trou d'air (33) est pourvue d'une première nervure convexe d'étanchéité (331) et d'une deuxième nervure convexe d'étanchéité (332) ; la première rainure d'admission à section transversale variable (341) est mise en communication avec la première voie d'air (213), la deuxième rainure d'admission à section transversale variable (342) est mise en communication avec la deuxième voie d'air (223), la première nervure convexe d'étanchéité (331) est adaptée à la première rainure d'admission à section transversale variable (341) pour modifier une quantité d'admission d'air de la première voie d'air (213), et la deuxième nervure convexe d'étanchéité (332) est adaptée à la deuxième rainure d'admission à section transversale variable (342) pour modifier une quantité d'admission d'air de la deuxième voie d'air (223).

9. Le dispositif d'émulsification (100, 200, 300, 400, 500) selon l'une quelconque des revendications 1 à 8, dans lequel la structure Venturi comprend en outre un premier corps principal tubulaire (201), un deuxième corps principal tubulaire (202) et un raccord de tube (30, 30a, 30b, 30c), la première voie de vapeur (211) est disposée dans le premier corps principal tubulaire (201), la deuxième voie de vapeur (221) est disposée dans le deuxième corps principal tubulaire (202), le raccord de tube (30, 30a, 30b, 30c) comprend une première voie de raccordement (31) et une deuxième voie de raccordement (32) disposées à intervalles, le premier corps principal tubulaire (201) rentre dans la première voie de raccordement (31), le deuxième corps principal tubulaire (202) rentre dans la deuxième voie de raccordement (32), et la voie de sortie (312) est disposée dans le raccord de tube (30, 30a, 30b, 30c).

10. Le dispositif d'émulsification (100, 200, 300, 400, 500) selon la revendication 9, dans lequel le premier corps principal tubulaire (201) comprend une première section intérieure (203) rentrant dans la première voie de raccordement (31) et une première section extérieure (204) exposée hors de la première voie de raccordement (31), le deuxième corps principal tubulaire (202) comprend une deuxième section intérieure (205) rentrant dans la deuxième voie de raccordement (32) et une deuxième section extérieure (206) exposée hors de la deuxième voie de raccordement (32), la première section extérieure (204) et la deuxième section extérieure (206) sont formées d'un seul tenant pour amener le premier corps principal tubulaire (201) et le deuxième corps principal tubulaire (202) à former d'un seul tenant un composant corps principal, la première voie de liquide (212) pénètre à travers une paroi de tube de la première voie de raccordement (31) pour communiquer avec la première chambre de mélange (21), et la deuxième voie de liquide (222) pénètre à travers une paroi de tube de la deuxième voie de raccordement (32) pour communiquer avec la deuxième chambre de mélange (22).

11. Le dispositif d'émulsification (100, 200, 300, 400, 500) selon la revendication 10, le dispositif d'émulsification (100, 200, 300, 400, 500) comprenant en outre un organe de verrouillage (41) disposé entre le composant corps principal (20, 20a, 20b, 20c) et le raccord de tube (30, 30a, 30b, 30c), et dans lequel l'organe de verrouillage (41) est configuré pour être manœuvré afin de se déplacer entre deux positions pour sélectivement permettre et limiter la séparation du composant corps principal (20, 20a, 20b, 20c) relativement au raccord de tube (30, 30a, 30b, 30c).

12. Le dispositif d'émulsification (100, 200, 300, 400, 500) selon la revendication 11, dans lequel le composant corps principal (20, 20a, 20b, 20c) est pourvu d'une rainure de blocage (25, 25a, 25b), une rainure de guidage (39) est disposée sur le raccord de tube (30, 30a, 30b, 30c), la rainure de guidage (39) est mise en communication avec la rainure de blocage (25, 25a, 25b), l'organe de verrouillage (41) passe par la rainure de guidage (39) et rentre partiellement dans la rainure de blocage (25, 25a, 25b), et l'organe de verrouillage (41) est configuré pour être entraîné afin de basculer entre une position de verrouillage et une position de déverrouillage par rapport au composant corps principal (20, 20a, 20b, 20c) et au raccord de tube (30, 30a, 30b, 30c) ; lorsque l'organe de verrouillage (41) est situé à la position de verrouillage, l'organe de verrouillage (41) rentre partiellement dans la rainure de blocage (25, 25a, 25b) ; lorsque l'organe de verrouillage (41) est situé à la position de déverrouillage, l'organe de verrouillage (41) quitte la rainure de blocage (25, 25a, 25b) ; le dispositif d'émulsification (100, 200, 300, 400, 500) comprenant en outre un organe de déverrouillage (42), l'ensemble couvercle (12) étant pourvu d'une rainure d'ouverture (125), l'organe de déverrouillage (42) comprenant une partie de déverrouillage et un crochet (421), l'organe de verrouillage (41) étant pourvu d'une rainure d'installation (411), la partie de déverrouillage étant exposée à l'extérieur de l'ensemble couvercle (12), le crochet (421) passant par la rainure d'ouverture (125) et rentrant au moins partiellement dans la rainure d'installation (411), et une direction d'extension de la rainure d'ouverture (125) étant parallèle à une direction de guidage de la rainure de guidage (39).

13. Le dispositif d'émulsification (100, 200, 300, 400, 500) selon l'une quelconque des revendications 1 à 12, le dispositif d'émulsification (100, 200, 300, 400, 500) comprenant en outre un appareil de basculement (70, 70a), la première voie de vapeur (211) et la deuxième voie de vapeur (221) étant raccordées à un joint de vapeur unique (73) par l'appareil de basculement (70, 70a), et l'appareil de basculement (70, 70a) étant configuré pour commander la mise en communication sélective de la première voie de vapeur (211) ou de la deuxième voie de vapeur (221) avec la source de vapeur ; ou, dans lequel la machine à boissons comprend un corps principal de machine à boissons et le dispositif d'émulsification (100, 200, 300, 400, 500), le corps principal de machine à boissons comprend un appareil de basculement (70, 70a), et l'appareil de basculement (70, 70a) est configuré pour commander la mise en communication sélective de la première voie de vapeur (211) ou de la deuxième voie de vapeur (221) avec la source de vapeur.

14. Une machine à boissons, comprenant :
le dispositif d'émulsification (100, 200, 300, 400, 500) selon l'une quelconque des revendications 1 à 13 ; et
une source de vapeur, dans laquelle la première voie de vapeur (211) et la deuxième voie de vapeur (221) du dispositif d'émulsification (100, 200, 300, 400, 500) sont sélectivement mises en communication avec la source de vapeur.
